(19) Europäisches Patentamt / European Patent Office / Office européen des brevets

(11) **EP 1 964 865 A1**

(12) **EUROPEAN PATENT APPLICATION**
published in accordance with Art. 158(3) EPC

(43) Date of publication:
**03.09.2008 Bulletin 2008/36**

(21) Application number: **06834270.8**

(22) Date of filing: **08.12.2006**

(51) Int Cl.:
*C08F 291/00* (2006.01)     *C08L 23/00* (2006.01)
*C08L 51/00* (2006.01)

(86) International application number:
**PCT/JP2006/324515**

(87) International publication number:
**WO 2007/066749 (14.06.2007 Gazette 2007/24)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.12.2005 JP 2005356606**
**26.05.2006 JP 2006146752**

(71) Applicant: **Mitsui Chemicals, Inc.**
**Tokyo 105-7117 (JP)**

(72) Inventors:
 • **MATSUGI, Tomoaki**
 **Sodegaura-shi**
 **Chiba 299-0265 (JP)**
 • **SAITO, Junji**
 **Sodegaura-shi**
 **Chiba 299-0265 (JP)**
 • **KANEKO, Hideyuki**
 **Sodegaura-shi**
 **Chiba 299-0265 (JP)**
 • **KASHIWA, Norio**
 **Sodegaura-shi**
 **Chiba 299-0265 (JP)**

 • **KOJOH, Shin-ichi**
 **Minato-ku**
 **Tokyo 105-7117 (JP)**
 • **ONOGI, Takayuki**
 **Sodegaura-shi**
 **Chiba 299-0265 (JP)**
 • **ISOKAWA, Motoaki**
 **Sodegaura-shi**
 **Chiba 299-0265 (JP)**
 • **OTA, Seiji**
 **Ichihara-shi**
 **Chiba 299-0108 (JP)**
 • **YASUI, Shigeyuki**
 **Ichihara-shi**
 **Chiba 299-0108 (JP)**

(74) Representative: **Cresswell, Thomas Anthony**
**J.A. KEMP & CO.**
**14 South Square**
**Gray's Inn**
**London**
**WC1R 5JJ (GB)**

(54) **OLEFIN POLYMER, COMPOSITION THEREOF, AND ADHESIVE RESIN COMPOSED OF SUCH COMPOSITION**

(57)     Provided is a new adhesive polyolefin resin composition, containing 1 to 100 % by weight of a high polymer structure, that has good heat resistance and excellent adhesion performance to polyolefins and various polar materials, wherein a polyolefin segment (A) is bonded with an addition polymer segment (B) of a non-olefinic vinyl monomer and a reactive group is introduced into the addition polymer segment (B) and an adhesive or dispersion obtained therefrom.

FIG. 1

EP 1 964 865 A1

**Description**

Technical Field

The present invention relates to a heat resistant olefin polymer useful for bonding polyolefins and polar materials, a composition thereof and an adhesive resin comprising the composition.

Background Art

Polyolefins are widely used in extrusion-molded products, blow-molded products, injection-molded products and the like, since they have in general excellent properties in moldability, heat resistance, mechanical properties, medical and hygienic compatibility, resistance against steam permeability and the like and good appearance in molded articles.

However, polyolefins are poor in compatibility and adhesiveness with polar resins with metals, glasses, papers or polar resins such as polyesters, polyamides, polyacetals, polycarbonates, polyacrylates since they do not contain polar groups within the molecule so that there is a problem with which their application as blends or to lamination is difficult. In order to solve such problems, a method to graft a polar group-containing monomer to the polyolefins to improve the affinity with the polar resins has conventionally been widely used. For example, a method to graft the polar group-containing monomer such as maleic anhydride, (meth)acrylic acid esters to the polyolefins has been generally used widely. Among them the maleic acid-grafted polyolefins have been generally developed with wide use as adhesives and compatibilizers of the polyolefins with metals, papers, polar thermoplastic resins, thermosetting resins and the like.

Such modified polyolefins have undergone a grafting reaction by addition of a radical generator represented by a peroxide. The radical generator causes scission or crosslinking of the polyolefin main chain so that such problems can be listed that there is a limit in the reaction conditions to obtain the polymers with target physical properties or a limit in the kind or amount grafted of the polar group-containing monomers. Modified polyolefins, which are prepared by mixing polyolefins with a vinyl monomer containing functional groups and a radical generator, and kneading at high temperature, have been industrialized. However, this method could lead similarly as above to the case where scission or crosslinking of the polyolefin chain causes obstacles in terms of manufacturing and physical properties. Furthermore, although the grafted polyolefins, to which a vinyl monomer or its polymer is grafted, are present in such compositions thus obtained, a larger part of the vinyl monomer is present as a free radical polymer without crosslinking in the polymer composition. Therefore they have a drawback of being insufficient with performance when used as adhesives or compatibilizers and the like. In order to compensate such drawbacks, there have been disclosed in Japanese Patent Laid-Open Publication No. 2002-167413 and Japanese Patent Laid-Open Publication No. 2004-131620 the technology, wherein polyolefin-grafted polymers, in which the polyolefin is bonded with the polar non-polyolefin segment, were manufactured in a condition that the side reactions such as crosslinking and formation of undesired components such as polar homopolymer are reduced by polymerizing non-olefinic vinyl monomers using a polyolefin incorporated with functional groups as a polymeric initiator in the anionic polymerization or regulated radical polymerization. However, the structure useful as an adhesive resin and the adhesion performance as its composition have not been disclosed.

Patent Document 1: Japanese Patent Laid-Open Publication No. 2002-167413
Patent Document 2: Japanese Patent Laid-Open Publication No. 2004-131620

Disclosure of the Invention

Problems to be Solved by the Invention

Under such circumstances, problems that the present inventors intend to solve are to provide a new polyolefin adhesive resin composition having good heat resistance and excellent adhesion performance to polyolefins and various polar materials. Means for Solving the Problems

The present applicants have found that the problems described above can be solved by a polyolefin adhesive resin that is regulated in the primary structure and the phase structure and has adhesion performance to various materials, that is, an olefin polymer in which a polyolefin segment (A) is bonded with a segment of non-olefinic vinyl monomer addition polymer (B) and the segment of non-olefinic vinyl monomer addition polymer (B) contains a reactive group selected from a hydroxyl group, a carboxylic acid group, an acid anhydride group, an amino group, an epoxy group, an isocyanate group, an oxazoline group, a phosphoric acid group, a boric acid group and a thiarane group, or by a resin composition containing 1 to 100 parts by weight of the polyolefin polymer, and accomplished the present invention.

Effect of the Invention

It becomes possible to provide a polyolefin adhesive resin composition exhibiting excellent performance in adhesion with not only a polyolefin but also metal, glass, plastic, paper and wood.

Brief Description of Drawings

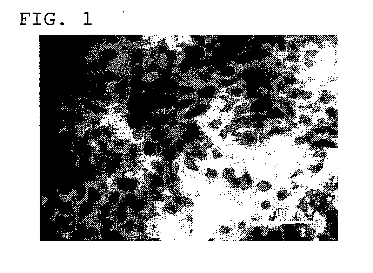

Figure 1 is a transmission electron micrograph of PP-g-P(nBA-co-GMA) obtained in Manufacture Example 4. The matrix phase in white color is the phase composed of a polypropylene segment not stained with ruthenium oxide, whereas the island phase in black color is a phase composed of a P(nBA-co-GMA) segment stained with ruthenium oxide.

Best Mode for Carrying out the Invention

The polyolefin adhesive resin composition of the present invention will be specifically described in the following.
The polyolefin adhesive resin of the present invention is the one in which the primary structure and the phase structure are regulated and have adhesion performance to various materials, that is, an olefin polymer in which a polyolefin segment (A) is bonded with a segment of non-olefinic vinyl monomer addition polymer (B) and the segment of non-olefinic vinyl monomer addition polymer (B) contains a reactive group selected from a hydroxyl group, a carboxylic acid group, an acid anhydride group, an amino group, an epoxy group, an isocyanate group, an oxazoline group, a phosphoric acid group, a boric acid group and a thiarane group, or a resin composition containing 1 to 100 parts by weight of the olefin polymer.

<u>Polyolefin Segment (A)</u>

The polyolefin segment (A) related to the present invention serves to control not only the adhesiveness with a polyolefin material when the adhesion target material is the polyolefin, but also the reinforcing effect of an adhesive layer and the heat resistance as an adhesive when composing the olefin polymer related to the present invention.
(A-1) to (A-3) listed below can be specifically illustrated as the polyolefin segment (A).
(A-1) : A homopolymer or copolymer of a linear or branched $\alpha$-olefin having 2 to 20 carbon atoms.
(A-2): An ethylene-vinyl ester copolymer.
(A-3): An ethylene-(meth)acrylic acid ester copolymer.

(A-1) is first described in detail. Homopolymers or copolymers of the linear or branched $\alpha$-olefins having 2 to 20 carbon atoms specifically include the homopolymers or copolymers of $\alpha$-olefins such as ethylene, propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene, norbornene and tetracyclododecene. Among such olefins exemplified, a polymer of olefin selected from at least one kind or more of ethylene, propylene, 1-butene, 1-hexene, 4-methyl-1-pentene, 1-octene and tetracyclododecene are preferred.
When a crystalline polyolefin is used as (A-1), a high density or medium density polyethylene or a high stereoregular polypropylene is preferred from a viewpoint of heat resistance of the adhesive. Among polyethylenes, the copolymerized amount of the component of an $\alpha$-olefin having 3 or more carbon atoms is preferably 0 to 10 mol%, and more preferably 0 to 7 mol%. Among such high crystalline and high stereoregular polyolefins, the high stereoregular propylene polymers with the copolymerized amount of the $\alpha$-olefin component to be 0 to 10 mol% is preferred, high stereoregular propylene polymers with the copolymerized amount of the $\alpha$-olefin component to be 0 to 7 mol% is more preferred and high stereoregular propylene homopolymers are further more preferred. Stereoregularity of the polyolefins may be either one of the isotactic polyolefins, syndiotactic polyolefins or atactic polyolefins.
When a low crystalline polyolefin, that is, a polyolefin segment in an elastomeric region is selected as (A-1), ethylene-propylene copolymers, ethylene-butene copolymers and ethylene-hexene copolymers are preferably used in terms of impartment of the adhesiveness. Further, 4-Methyl-1-pentene (co)polymers and ethylene-cyclic olefin copolymers are preferably used in application as electronic materials and optical materials.
Next (A-2) is described in detail. Examples of vinyl esters in ethylene-vinyl ester copolymers specifically include vinyl acetate, vinyl propionate and vinyl neoacetate. Ethylene copolymers produced by a high pressure method are in general preferably used.

Finally (A-3) is described in detail. Examples of (Meth)acrylic acid esters in ethylene-(meth)acrylic acid ester copolymers include unsaturated carboxylic acid esters having 4 to 8 carbon atoms, for example, acrylic acid esters such as methyl acrylate, ethyl acrylate, n-propyl acrylate, isopropyl acrylate, n-butyl acrylate, t-butyl acrylate and isobutyl acrylate and methacrylic acid esters such as methyl methacrylate, ethyl methacrylate, n-propyl methacrylate, isopropyl methacrylate, n-butyl methacrylate, t-butyl methacrylate, and isobutyl methacrylate. Such comonomers may be used in one kind or two kinds or more.

The polyolefin segment (A) related to the present invention may also be composed of not only one kind but also two kinds or more selected from the (A-1) to (A-3) described above. The polyolefin segment (A) may be grafted with maleic anhydride, acrylic acid esters and the like or ionically crosslinked by ionic compounds or metal ions.

The molecular weight of the crystalline polyolefin segment (A) related to the present invention is not particularly limited, but is generally 500 or more and 1,000,000 or less, preferably 1,000 or more and 500,000 or less as the number average molecular weight (Mn) relative to polystyrene standards measured with high temperature GPC in order to sufficiently exhibit heat resistance and compatibility when used as adhesives or resin composition as its precursor.

Addition Polymer Segment (B)

The addition polymer segment (B) related to the present invention serves to control the impartment of physical adhesion force to a material as an adhesion target and the impartment of adhesion force through a chemical bond or intermolecular interaction when composing the olefin polymer related to the present invention. The addition polymer segment (B) has the structure, in which the reactive groups are introduced into a polymer segment grown by chain propagation of a non-olefinic vinyl monomer.

A reactive group having high affinity to a target resin and/or capability of the chemical reaction with a functional group present in the adherend resin is introduced into the addition polymer segment (B) of the present invention in consideration of the chemical properties of an adhesion target material and molding conditions.

That is, the addition polymer segment (B) of the present invention contains a reactive group selected from a hydroxyl group, a carboxylic acid group, an acid anhydride group, an amino group, an epoxy group, an isocyanate group, an oxazoline group, a maleimide group, a phosphoric acid group, a phosphoric acid ester group, a boric acid group, a boric acid ester group and a thiarane group.

The reactive group described above may also be protected with a low molecular protective group with a molecular weight less than 1000, which can be easily eliminated at a molding temperature generally of around 100°C to 200°C when bonding to the adherend.

From the viewpoint of reactivity, examples of the reactive group preferably include an acid anhydride group, an amino group, an epoxy group, an isocyanate group, a boric acid group and the groups derived from these groups.

Such reactive groups may be introduced singly or in combination of two kinds or more into the addition polymer segment (B).

The reactive groups may be introduced into the addition polymer segment (B) successively in a form of a monomer unit or in a form of a copolymer of the monomer with an unreactive monomer. When introduced as the copolymer, it may be introduced randomly or as a block in the reactive polymer segment.

The amount of the reactive group introduced is generally in a range of 0.1 to 100 mol%, preferably 0.5 to 75 mol%, more preferably 1.0 to 50 mol%, and particularly more preferably 5 to 30 mol% relative to a total monomer unit present in the reactive polymer segment (B) in order to ensure sufficient reactivity with the target adherend resin. The reactive group introduced may be present in a random form or in a block or gradient distribution throughout the addition polymer segment (B), but the reactive group present only at a binding site between the polyolefin segment (A) and the addition polymer segment (B) or the reactive group singularly present at the end of the addition polymer segment (B) is not relevant to the reactive groups introduced into the addition polymer segment (B) related to the present invention.

A chemical structure of the addition polymer segment (B) is preferably a polymer of a vinyl monomer containing the reactive groups described above in terms of manufacturing convenience.

The vinyl monomers having the reactive groups are the vinyl monomers having the reactive group described above in the molecule.

Examples of the vinyl monomers having the hydroxyl group include (meth)acrylic acid esters such as hydroxyethyl (meth)acrylate, 2-hydroxypropyl (meth)acrylate, 3-hydroxypropyl (meth)acrylate, 2-hydroxy-3-phenoxy-propyl (meth)acrylate, 3-chloro-2-hydroxypropyl (meth)acrylate, glyceryl mono(meth)acrylate, pentaerythrityl mono(meth)acrylate, trimethylolpropane mono(meth)acrylate, tetramethylolethane mono (meth) acrylate, butanediol mono (meth) acrylate, polyethylene glycol mono(meth)acrylate and 2-(6-hydroxyhexanoyloxy)ethyl acrylate; 10-undecen-1-ol, 1-octen-3-ol, 2-norbornenylmethanol, hydroxystyrene, hydroxyethyl vinyl ether, hydroxylbutyl vinyl ether, N-methylolacrylamide, 2-(meth)acroyloxyethyl acid phosphate, glyceryl monoallyl ether, allyl alcohol, allyloxyethanol, 2-butene-1,4-diol and glyceryl monoalcohol.

Examples of the vinyl monomers having the carboxylic acid group include acrylic acid and methacrylic acid.

Examples of the vinyl monomers having the acid anhydride group include maleic anhydride, 2-chloromaleic anhydride, 2-bromomaleic anhydride, crotonic anhydride, methacrylic anhydride, acrylic anhydride, allylsuccinic anhydride, acetylacrylic acid and acetylmethacrylic acid.

Examples of the vinyl monomers having the amino group include 2-aminoethyl (meth)acrylate or its hydrochloride salt, t-butylaminoethyl (meth)acrylate, 2-(dimethylamino) methacrylate, 2-(dimethylamino) acrylate, 2-(diethylamino) methacrylate, N-(3-dimethylaminopropyl)methacrylamide, and N-(3-dimethylaminopropyl)acrylamide.

Examples of the vinyl monomers having the epoxy group include glycidyl acrylate, glycidyl methacrylate; monoglycidyl and alkylglycidyl esters of the dicarboxylic acid (the number of the carbon atoms of the alkyl group is 1 to 12 in the case of the monoglycidyl esters) such as monoglycidyl and diglycidyl maleates, monoglycidyl and diglycidyl fumarates, monoglycidyl and diglycidyl crotonates, monoglycidyl and diglycidyl tetrahydrophthalates, monoglycidyl and glycidyl itaconates, monoglycidyl and diglycidyl butenetricarboxylates, monoglycidyl and diglycidyl citraconates, monoglycidyl and diglycidyl endo-cis-bicyclo[2.2.1]hepta-5-ene-2,3-dicarboxylate (nadic acid TM), monoglycidyl and diglycidyl endo-cis-bicyclo[2.2.1]hepta-5-ene-2-methyl-2,3-dicarboxylate (methylnadic acid TM) and monoglycidyl and glycidyl allylsuccinates, alkylglycidyl esters of p-styrenecarboxylic acid, allyl glycidyl ether, 2-methylallyl glycidyl ether, p-glycidyloxystyrene, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene and vinylcyclohexene monoxide.

Examples of the vinyl monomers having the isocyanate group include 2-isocyanatoethyl methacrylate, 2-isocyanatoethyl acrylate and 2-isocyanatoethyl methacrylate.

Examples of the vinyl monomers having the oxazoline group include 2-isopropenyloxazoline and the like.

Examples of the vinyl monomers having the phosphoric acid group include acid phosphoxyethyl methacrylate, acid phosphoxyethyl acrylate, acid phosphoxypolyoxypropylene glycol monomethacrylate and their protected derivatives.

Examples of the vinyl monomers having the boric acid group include 4-vinylphenyl borate or its derivative protected by an alcohol or a diol.

Such vinyl monomers containing the reactive group may be introduced into the addition polymer segment (B) with no problem in one kind or two kinds or more.

The chemical structure of the addition polymer segment (B) may be a homopolymer of the vinyl monomer containing the reactive groups described above, and in general preferably a copolymer containing 0.5 to 75% of vinyl monomer containing the reactive group.

As the vinyl monomers to copolymerize with the vinyl monomer containing the reactive group described above, they are not particularly limited so far as they are non-olefinic vinyl monomers. Styrene or their derivatives, acrylic acid esters, methacrylic acid esters, acrylamides and dienes can be used.

Specifically the examples include styrene, α-methylstyrene; (meth)acrylic acid type monomers such as(meth) acrylic acid, methyl (meth)acrylate, ethyl (meth)acrylate, n-propyl (meth)acrylate, isopropyl (meth) acrylate, n-butyl (meth) acrylate, isobutyl (meth)acrylate, tert-butyl (meth) acrylate, n-pentyl (meth) acrylate, n-hexyl (meth)acrylate, cyclohexyl (meth)acrylate, n-heptyl (meth)acrylate, n-octyl (meth)acrylate, 2-ethylhexyl (meth) acrylate, nonyl (meth)acrylate, decyl (meth) acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, 2-(dimethylamino)ethyl (meth)acrylate, γ-(methacryloyloxypropyl)trimethoxysilane, an ethylene oxide adduct with (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth) acrylate, 2-perfluorohexylethyl (meth)acrylate, 2-perfluorodecylethyl (meth)acrylate, 2-isocyanatoethyl (meth)acrylate, 2-phosphoxyethyl (meth)acrylate, 2-phosphoxy-2-chloromethylethyl (meth)acrylate, 3-chloro-2-acid phosphoxypropyl methacrylate, 2-phosphoxypropyl (meth)acrylate, polyethylene glycol (meth) acrylate, phosphoxypolyethylene glycol (meth)acrylate, phosphoxypolypropylene glycol (meth)acrylate, 2-dimethylaminoethyl (meth)acrylate, 2-methacryloyloxyethylphosphorylcholine and 2-perfluorohexadecylethyl (meth) acrylate; styrene monomers such as styrene, vinyltoluene, α-methylstyrene, chlorostyrene, styrenesulfonic acid and its salt; fluorine-containing vinyl monomers such as perfluoroethylene, perfluoropropylene and vinylidene fluoride, silicon-containing vinyl monomers such as vinyltrimethoxysilane and vinyltriethoxysilane; maleic anhydride, maleic acid, monoalkyl esters and dialkyl esters of maleic acid, fumaric acid, monoalkyl esters and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group-containing vinyl monomers such as acrylonitrile and methacrylonitrile; amide group-containing vinyl monomers such as (meth)acrylamide, N-methyl (meth)acrylamide, N-ethyl (meth)acrylamide, N-propyl (meth)acrylamide, N-isopropyl (meth)acrylamide, N-butyl (meth)acrylamide and N,N-dimethyl (meth)acrylamide; vinyl ester monomers such as vinyl acetate, vinyl propionate, vinyl pivalate, vinyl benzoate and vinyl cinnamate; olefin monomers such as ethylene, propylene and butene; diene monomers such as butadiene and isoprene; vinyl chloride, vinylidene chloride, allyl chloride and allyl alcohol. Such vinyl monomers may be used singly to form the copolymer with the vinyl monomers containing the reactive group described above or may be used in two or more kinds to form the copolymer with the vinyl monomers containing the reactive group described above.

Meanwhile there is a case where adhesiveness can be enhanced by generating physical adhesion effect of the segment (B) with the target adherend material in addition to introducing such reactive groups into the addition polymer segment (B) in the present invention. That is, a glass transition temperature (Tg) of the addition polymer segment (B) measured by a differential scanning calorimeter (DSC) is between -80°C and 50°C, preferably between -70°C and 30°C, and more preferably between -60°C and 30°C in terms of exhibiting the physical adhesion effect.

The addition polymer segment (B) is preferably copolymerized with 10 mol% or more of methacrylic acid esters or acrylic acid esters ester-linked with a saturated hydrocarbon group having 3 or more carbon atoms in order to form the addition polymer segment (B) having such a glass transition temperature. As the preferred (meth)acrylate, n-Propyl (meth)acrylate, isopropyl (meth)acrylate, n-butyl (meth)acrylate, isobutyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate and dodecyl (meth)acrylate may be preferably mentioned.

The molecular weight of the addition polymer segment (B) related to the present invention is 100 to 1,000,000, preferably 500 to 500,000, and more preferably 1,000 to 10,000 as the number average molecular weight (Mn) relative to polystyrene standards, the number average molecular weight (Mn) relative to polystyrene standards measured by the high temperature gel permeation chromatography (GPC) and a molecular weight distribution (Mw/Mn) is preferably in a range of 1.0 to 3.5, and more preferably in a range of 1.5 to 3.0.

The addition polymer (B) related to the present invention may polymers that have a halogen atom or modified various molecules at the end the polymer or monomer units thereof may be partially hydrolyzed or ionically crosslinked by a metal or an ionic molecule, or are modified through the reactive group introduced or partially crosslinked.

Olefin Polymers

The olefin polymer related to the present invention is characterized by a structure, in which the polyolefin segment (A) described above is bonded through a covalent bond with the reactive polymer segment (B).

Its molecular shape may be any form such as a diblock polymer structure [(A)-b-(B)], in which (A) and (B) are bonded linearly, a linear multiblock structure [(A$_1$) -b- (B$_1$) -b- (A$_1$) -b- (B$_2$) -b ------- b- (A$_n$) -b- (B$_m$)], 1n which polymers are further chained, a graft polymer structure [(A) -g- (B) or (B)-g-(A)], in which (A) and (B) are bonded to be grafted , a star polymer structure [(A)-star-(B)] or the combination thereof to the extent not impairing the feature of the each segment described above, but the diblock structure, triblock structure or graft structure is preferably mentioned. A network polymer structure formed by partial crosslinking of the polymer with such a structure may also be preferably included.

The binding section between the polyolefin segment (A) and the addition polymer segment (B) in the olefin polymer may also be formed by direct bonding of the polyolefin segment (A) with the addition polymer segment (B), but may be formed via a bonding group in a range not impairing the physical properties of (A) and (B), that is, a content of the binding section being less than 5% by weight relative to the olefin polymer.

Direct bonding via a covalent bond between the polyolefin segment (A) and the reactive polymer segment (B) is important for the olefin polymer related to the present invention and its compositions in order to exhibit the adhesiveness and the presence of an addition polymer (B') not bonded with the polyolefin segment (A) substantially deteriorates the adhesion performance.

Therefore, a weight composition ratio [B']/[B] of the addition polymer (B') not covalently bonded with the polyolefin segment (A) and similar to the addition polymer segment (B) versus the addition polymer segment (B) covalently bonded with the polyolefin segment (A) is less than 1.0, preferably less than 0.5, and more preferably less than 0.1. The term "similar" in the present invention is defined as the addition polymer that is not introduced into the polyolefin segment (A) in a manufacture process to introduce the addition polymer segment (B), namely, an non-bonded addition polymer.

A procedure to combine a solvent extraction method with a spectroscopic method is simple and quick as the method for identifying the weight composition ratio [B']/[B]. As a general method, a solvent to dissolve only the addition polymer segment (B) contained in the resin is used to carry out an extraction operation, preferably using a Soxhlet extractor to measure $^1$H-NMR spectra of the resin before and after extraction to analyze the composition, from which the weight composition ratio is calculated. Extraction solvents preferably include chloroform, acetone, acetonitrile and tetrahydrofuran.

One example of the calculation method for the weight composition ratio [B']/[B] is given below.

[B']/[B] can be calculated according to the following equation (1), provided that a total content of the addition polymer segment (B) and the addition polymer (B') contained in the adhesive thermoplastic resin composition obtained by the $^1$H-NMR analysis is X (weight %) and a content of the addition polymer segment (B) unextracted and left as an insoluble polymer after extraction operation determined by $^1$H-NMR analysis is Y (weight %).

$$[B']/[B] = (X/Y-1) / (1-X/100) \qquad \text{Eq. (1)}$$

Unlike general alloyed polymers, the olefin polymer related to the present invention has a fine phase structure, since the olefin polymer contains the olefin polymer, in which two kinds or more of segments with different properties are covalently bonded. Specifically, when the phase consisting of the polyolefin segment (A) and the phase consisting of the addition polymer segment (B) form the sea-island structure in the phase structure of the section observed by a transmission electron microscope, it is mentioned as a preferred structure that the phase consisting of the addition polymer segment (B) generally forms a dispersion phase having an area average particle diameter of 0 to 300 nm, further preferably 0 to 100 nm. The figure at end of the present application illustrates as an example the phase structure of the section of the olefin polymer obtained in Manufacture Example 4 observed by the transmission electron microscope.

Manufacturing Method of Olefin Polymers

The manufacturing method of the olefin polymer, in which the polyolefin segment (A) is bonded with the addition polymer segment (B) of a non-olefinic vinyl monomer, related to the present invention, preferably includes the method to polymerize vinyl monomers using the functional group-introduced polyolefin as a macro-initiator in the anionic polymerization as disclosed in Japanese Patent Laid-Open Publication No. 2002-167413 filed by the present applicants or the method to polymerize radical polymerizable vinyl monomers by the controlled radical polymerization using functional group-introduced polyolefins as a controlled radical polymerizable polymer initiator (macro-initiator) as disclosed in Japanese Patent Laid-Open Publication No. 2004-131620 (hereinafter referred to as a macro-initiator method).

When the macro-initiator method is used, a method by the controlled radical polymerization is used most preferably from a viewpoint of the abundance in kinds of polymerizable monomers and the wide selectivity in the reaction conditions.

The preferred controlled radical polymerization method applicable to the present invention includes the method to bond a nitroxide-containing group followed by thermal cleavage to generate radicals to polymerize monomers as disclosed in Trend Polym. Sci. (1996), 4, 456 (NMRP: Nitroxide-Mediated Radical Polymerization), the method called the atom transfer radical polymerization (ATRP), that is, the method to radically polymerize radical polymerizable monomers using organic halides or halogenated sulfonyl compounds as an initiator and metal complexes with a transition metal as a central metal atom as a catalyst as disclosed in Science, (1996), 272, 866; Chem. Rev., 101, 2921 (2001); WO 96/30421; WO 97/18247, WO 98/01480, WO 98/40415; WO 00/156795; Sawamoto, et al., Chem. Rev., 101, 3689 (2001); Japanese Patent Laid-Open Publication No. H8-41117; Japanese Patent Laid-Open Publication No. H9-208616; Japanese Patent Laid-Open Publication No. 2000-264914; Japanese Patent Laid-Open Publication No. 2001-316410; Japanese Patent Laid-Open Publication No. 2002-80523 and Japanese Patent Laid-Open Publication No. 2004-307872, or the polymerization method called the reversible addition fragmentation chain transfer (RAFT) polymerization.

The atom transfer radical polymerization method is a dominant controlled radical polymerization method to introduce the copolymer (B) of the non-olefinic vinyl monomer related to the present invention because of easiness of the method to introduce the polymerization initiation group in radical polymerization and the abundance of kinds of the selectable monomers.

A manufacturing method using the atom transfer radical polymerization is specifically described below.

As shown in Science, (1996), 272, 866 and others, the structure to initiate the atom transfer radical polymerization needs a group bonded with a halogen atom, and the structure with the halogen atom bonded, in which the bond dissociation energy is low is preferred.

Preferred structures include the structure, in which the halogen atom is introduced, for example, wherein the halogen atom is bonded with a tertiary carbon atom, a carbon atom adjacent to an unsaturated carbon-carbon bond such as the vinyl, vinylidene and phenyl group, or a conjugated group or a atom adjacent to the conjugated group such as carbonyl, cyano and sulfonyl group.

A functional group conversion method or direct halogenation method is effective as such a method to introduce into the polyolefin the halogen atom having the capability to initiate the atom transfer radical polymerization.

The functional group conversion method is the method to convert the functional group site, into which the functional group such as a hydroxyl group, a carboxyl group, an acid anhydride group, a vinyl group or a silyl group is introduced, to the structure of the atom transfer radical initiator, for example, the procedure to obtain a surface-halogenated polyolefin molded article having capability to initiate the atom transfer radical polymerization by a method of modifying a hydroxyl group-containing polyolefin with a low-molecular compound such as 2-bromoisobutyryl bromide as disclosed in the publication of unexamined patent application (Japanese Patent Laid-Open Publication No. 2004-131620).

On the other hand, the direct halogenation method is the method to directly apply a halogenation reagent to a polyolefin to yield a halogenated polyolefin having a carbon-halogen bond.

The halogenation reagents used and the kinds of the halogen atoms introduced are not particularly limited, but brominated polyolefins into which a bromine atom is introduced are preferred in terms of the balance between stability of the atom transfer radical initiation skeleton and the initiation efficiency.

From such a viewpoint, preferred halogenation reagents in the manufacture of the halogenated polyolefins by the direct halogenation method include bromine and N-bromosuccinimide (NBS).

The brominated polyolefins having the capability to initiate the atom transfer radical polymerization can be obtained, for example, by the method of photochemical bromination reaction, in which an alkene is brominated by reacting with bromine under light irradiation as disclosed by G.A. Russel, et al. in J. Am. Chem. Soc., 77, 4025 (1955), the method of brominating a cyclic alkyl by heating under reflux in a solvent in the presence of a 50% NaOH aqueous solution and carbon tetrabromide as disclosed by P.R. Schneiner, et al. in Angew. Chem. Int. Ed. Engl., 37, 1895 (1998), or the method of brominating the alkyl end group with N-bromosuccinimide via the radical reaction using a radical initiator such as azobisisobutyronitrile as disclosed by M.C. Ford et al. in J. Chem. Soc., 2240 (1952).

The halogenated polyolefins obtained are used for the atom transfer radical polymerization. The presence of the halogen atoms can be confirmed by $^1$H-NMR or ion chromatography and the like.

The atom transfer radical polymerization is carried out by bringing the halogenated polyolefin obtained as above into contact with the non-olefinic vinyl monomers and a catalyst component generally under deoxygenated atmosphere.

A solvent may be used in this case and the solvent applicable is the one not interfering with the polymerization reaction. The solvents include, for example, aromatic hydrocarbon solvents such as benzene, toluene and xylene, aliphatic hydrocarbon solvents such as pentane, hexane, heptane, octane, nonane and decane, alicylic hydrocarbon solvents such as cyclohexane, methylcyclohexane and decahydronaphthalene, chlorinated hydrocarbon solvents such as chlorobenzene, dichlorobenzene, trichlorobenzene, methylene chloride, chloroform, carbon tetrachloride and tetrachloroethylene, alcohol solvents such as methanol, ethanol, n-propanol, isopropanol, n-butanol, sec-butanol and tert-butanol, ketone solvents such as acetone, methyl ethyl ketone and methyl isobutyl ketone, ester solvents such as ethyl acetate and dimethyl phthalate, ether solvents such as dimethyl ether, diethyl ether, di-n-amyl ether, tetrahydrofuran and dioxyanisole. Water may also be used as the solvent. Such solvents may be used singly or as a mixture of two kinds or more.

A type of polymerization is not particularly limited and the bulk polymerization, solution polymerization, suspension polymerization, emulsion polymerization and bulk-suspension polymerization can be applied.

The polymerization temperature is not particularly limited so far as the atom transfer radical polymerization proceeds at the temperature and can be set arbitrarily. The temperature is generally at -50°C to 150°C, preferably 0°C to 80°C, and more preferably 0°C to 50°C while it is not uniform depending on the degree of polymerization of a desired polymer, the kind and volume of the radical polymerization initiator and the solvent used. The polymerization reaction may be carried out under the conditions of reduced pressure, normal pressure or applied pressure. After carrying out the reaction, any known method for purification and drying to eliminate the catalyst residues, unreacted monomers and solvents may be used.

Regarding the introduction of the reactive group, various reactive groups can be introduced by (co)polymerizing the vinyl monomers containing the reactive groups described above in the process to introduce the non-olefin addition polymerization segment (B) described above by the macro-initiator method.

On the other hand, when the presence of the reactive groups interferes with the progress of polymerization in the macro-initiator method or the vinyl monomers having the reactive group intended is not easily polymerized, a method is preferably used, in which the addition polymer segment (B) of the non-olefinic vinyl monomers is introduced into the polyolefin segment by the macro-initiator method and followed by further adding or chemically modifying with the reactive group-containing compounds (hereinafter referred to as post-modification method).

The post-modification method is the method to introduce the reactive groups described above into the addition polymer segment (B) by the macro-initiator method using a solvent.

Introduction of the reactive groups is generally carried out in a solvent, but may be carried out by reacting under a melting condition of the polymer by using an extruder and the like.

For example, bifunctional acid anhydrides such as pyromellitic dianhydride or 3,3',4,4'-benzophenonetetracarboxylic dianhydride can be reacted with the addition polymer segment (B) introduced with the hydroxyl group to introduce the acid anhydride group. The bifunctional isocyanates such as hexamethylenediisocyanate, and xylene diisocyanate can also be reacted with the addition polymer segment (B) introduced with the hydroxyl group to introduce the isocyanate group.

Other examples also include the conversion of the vinyl group to the epoxy group by epoxidation of the addition polymer segment (B), into which the vinyl group is introduced, with peroxides and the like.

As for the kind of the solvent, any compound can be used in the post-modification method when the solvent is a compound that does not interfere with the reaction. Examples of the solvent specifically include, for example, aromatic hydrocarbon solvents such as benzene, toluene and xylene, aliphatic hydrocarbon solvents such as pentane, hexane, heptane, octane, nonane and decane, alicylic hydrocarbon solvents such as cyclohexane, methylcyclohexane and decahydronaphthalene, chlorinated hydrocarbon solvents such as chlorobenzene, dichlorobenzene, trichlorobenzene, methylene chloride, chloroform, carbon tetrachloride and tetrachloroethylene, alcohol solvents such as methanol, ethanol, n-propanol, isopropanol, n-butanol, sec-butanol and tert-butanol, ketone solvents such as acetone, methyl ethyl ketone, methyl isobutyl ketone, ester solvents such as ethyl acetate, dimethyl phthalate and the like and ether solvents such as dimethyl ether, diethyl ether, di-n-amyl ether, tetrahydrofuran, dioxyanisole and the like.

The olefin polymer related to the present invention synthesized by such methods can be purified and isolated using a publicly known method such as a combination of filtration, centrifugal separation, reprecipitation operations or washing to eliminate the catalyst components, solvents, unreacted monomers and compounds used in the polymerization and reaction.

On the other hand, while in the past unsaturated acids such as acrylic acid, methyl acrylate, maleic acid and maleic anhydride or the derivative thereof have been tried to directly graft to polyolefins in the presence of a radical generator such as organic peroxides (Japanese Patent Application Publication No. S43-27421, Japanese Patent Application Publication No. S44-15422, Japanese Patent Laid-Open Publication No. 2000-159843 and others), there have been such problems that the crosslinking reaction of the polyolefin or the decomposition reaction of the polyolefin, which is a side reaction affected by the radical generator added, may occur or that the unreacted monomers or the homopolymers of the monomer may remain in the compositions a great deal. Therefore such methods are not suitable as a manufacturing method of the olefin polymer related to the present invention having the well-controlled primary structure and the excellent adhesion performance.

Adhesive Resin Compositions

The resin composition related to the present invention is characterized by containing 1 to 100% by weight of the olefin polymer described above. They are generally melt-kneaded with other thermoplastic resins such as polyolefins in order to control the molding processability, mechanical properties and adhesiveness depending on the use thereof. Particularly, the preferred resin compositions characterized by comprising 1 to 99% by weight of the polyolefin polymer described above and 99 to 1% by weight of polyolefin (C) (however, a sum of both components is 100% by weight) are mentioned.

The resin composition of the present invention, which is diluted with the olefin polymer, has a fine phase separation structure similar to that of the olefin polymer described above. Specifically in the phase structure of the section of the resin composition observed by a transmission electron microscope, it is mentioned as a preferred structure that the phase consisting of the addition polymer segment (B) generally forms the dispersion phase with an area average particle diameter of 0 to 300 nm and further preferably 0 to 100 nm.

Crosslinking agents, fillers, crosslinking promoters, crosslinking auxiliaries, softeners, tackifiers, antiaging agents, foaming agents, processing auxiliaries, contact enhancing agents, inorganic fillers, organic fillers, crystal nucleating agents, heat resistant stabilizers, weathering stabilizers, antistatic agents, colorants, lubricants, fire retardants antiblooming agents may be included in the resin compositions related to the present invention so far as they are not interfering with the adhesive performance.

Polyolefins (C)

The polyolefin (C) in the present invention used in the resin composition containing the polyolefin polymer described above is at least one kind of olefin (co)polymer selected from $\alpha$-olefins having 2 to 20 carbon atoms.

The $\alpha$-olefins having 2 to 20 carbon atoms include linear or branched $\alpha$-olefins, for example, ethylene, propylene, 1-butene, 2-butene, 1-pentene, 3-methyl-1-butene, 1-hexene, 4-methyl-1-pentene, 3-methyl-l-pentene, 1-octene, 1-decene, 1-dodecene, 1-tetradecene, 1-hexadecene, 1-octadecene and 1-eicosene; and cyclic olefins, for example, cyclopentene, cycloheptene, norbornene, 5-methyl-2-norbornene, tetracyclododecene and 2-methyl-1,4,5,8-dimethano-1,2,3,4,4a,5,8,8a-octahydronaphthalene.

The polyolefin (C) may be copolymerized with a small amount of polar monomers, for example, $\alpha, \beta$-unsaturated carboxylic acids such as acrylic acid, methacrylic acid, fumaric acid, maleic anhydride, itaconic acid, itaconic anhydride and bicyclo[2.2.1]hept-2-ene-5,6-dicarboxylic anhydride; metal salts of the $\alpha, \beta$-unsaturated carboxylic acids such as sodium, potassium, lithium, zinc, magnesium and calcium salts; $\alpha, \beta$-unsaturated carboxylic acid esters such as methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate and isobutyl methacrylate; vinyl esters such as vinyl acetate, vinyl propionate, vinyl caproate, vinyl capriate, vinyl laurate, vinyl stearate and vinyl trifluoroacetate; and unsaturated glycidyl esters such as glycidyl acrylate, glycidyl methacrylate and monoglycidyl itaconate.

The polyolefin (C) may be copolymerized with a small amount of vinylcyclohexane, dienes or polyenes. As the dienes and polyenes, cyclic or linear compounds having 4 to 30 carbon atoms, preferably 4 to 20 carbon atoms with two or more double bonds are used. Specifically they include butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinylnorbornene, dicyclopentadiene, 7-methyl-1,6-octadiene, 4-ethylidene-8-methyl-1,7-nonadiene, 5,9-dimethyl-1,4,8-decatriene; further aromatic vinyl compounds, for example, styrene; mono- or polyalkylstyrenes such as o-methylstyrene, m-methylstyrene, p-methylstyrene, o,p-dimethylstyrene, o-ethylstyrene, m-ethylstyrene, and p-ethylstyrene; functional group-containing styrene derivatives such as methoxystyrene, ethoxystyrene, vinylbenzoic acid, methyl vinylbenzoate, vinylbenzyl acetate, hydroxystyrene, o-chlorostyrene, p-chlorostyrene, and divinylbenzene; 3-phenylpropylene, 4-phenylpropylene and $\alpha$-methylstyrene.

The melt flow rate (MFR: ASTM D 1238, 230°C and a load of 2.16 kg) of the polyolefin (C) is generally 0.01 to 200 g/10 min, and preferably 0.1 to 100 g/10 min.

In the present invention, when the polyolefin (C) has stereoregularity, it may be either a syndiotactic polyolefin or isotactic polyolefin.

Such polyolefin (C) can be manufactured according to the conventionally known method.

The polyolefin (C) used in the present invention is preferably polyethylene or polypropylene.

The preferred polyethylenes include ethylene homopolymers and ethylene-$\alpha$-olefin copolymers. The ethylene-$\alpha$-olefin copolymers are, for example, random copolymers of ethylene with $\alpha$-olefins having 4 to 12 carbon atoms.

As the $\alpha$-olefins having 4 to 12 carbon atoms herein, for example, 1-butene, 1-pentene, 1-hexene, 4-methyl-1-pentene, 1-octene, 1-decene and 1-dodecene are mentioned.

It is preferable that such ethylene-$\alpha$-olefin copolymers are composed of the constitutional unit derived from ethylene in a proportion of 65 to 99% by weight, and preferably 75 to 96% by weight and the constitutional unit derived from the $\alpha$-olefins having 4 to 12 carbon atoms in a proportion of 1 to 35% by weight, and preferably 4 to 25% by weight.

The density of the ethylene-$\alpha$-olefin copolymers is in a range of 0.880 to 0.970 g/cm$^3$, and preferably 0.890 to 0. 955 g/cm$^3$.

And the melt flow rate (MFR: ASTM D1238, 190°C and a load of 2.16 kg) of the ethylene-$\alpha$-olefin copolymers is in a rage of 0.01 to 200 g/10 min, and preferably 0.05 to 50 g/10 min.

In the compositions of the present invention, the polyolefin (C) may be used in a combination of two kinds or more and as the combination, for example, a combination of a crystalline polyolefin and an amorphous or low-crystalline polyolefin.

Manufacturing Method of Adhesive Containing the Olefin Polymer or the Resin Composition Thereof.

The adhesive containing the olefin polymer of the present invention or the resin composition thereof can be generally manufactured by various known methods.

For example, when used as a water dispersion type adhesive, the adhesive is obtained by kneading the olefin polymer or the resin composition thereof by a pressure kneader or an extruder, adding alkaline water thereto and further kneading, then cooling and picking out the further kneaded resin, putting the kneaded resin into ion-exchange water to disperse with a homogenizing mixer and the like, and dispersing the adhesive resin composition in water.

When used as an organic solvent type adhesive, the adhesive is obtained by mixing the resin composition of the present invention with an organic solvent capable of dissolving the resin composition to completely dissolve it at a particular temperature, then cooling to room temperature to precipitate the crystalline component of the modified resin in a form of particles and dispersing the resin composition of the present invention in the organic solvent.

When used as a hot melt type adhesive, for example, the adhesive is obtained by feeding the resin composition of the present invention and various additives and/or tackifiers and/or other thermoplastic resin compositions if needed in a predetermined proportion to a mixer such as a Brabender and a twin-axis extruder, heating and melt-kneading the mixture and then molding into a desired shape, for example, in a form of pellets, flakes and rods.

When used as the hot melt type adhesive, the resin composition of the present invention contains 0 to 99% by weight, preferably 0 to 90% by weight, and more preferably 0 to 77% by weight of additives and/or tackifiers and/or other thermoplastic resins.

Hydrogenated alicyclic tackifiers, rosins, modified rosins or esterified products thereof, aliphatic petroleum resins, alicyclic petroleum resins, aromatic petroleum resins, copolymerized petroleum resins of the aliphatic components and aromatic components, low molecular weight styrene resins, isoprene resins, alkylphenol resins, terpene resins and coumarone-indene resins are specifically mentioned as a preferred example of the tackifiers. Such tackifiers may be used singly as one kind or in a combination of two kinds or more.

Various additives may be added to the resin composition of the present invention if needed so far as they do not impair the purpose of the present invention. Such additives include, for example, softeners, stabilizers, fillers, antioxidants, crystal nucleating agents, waxes, thickeners, mechanical stability imparting agents, leveling agents, wetting agents, film forming auxiliaries, crosslinking agents, preservatives, anticorrosion agents, pigments, fillers, dispersants, antifreezing agents and antifoaming agents and these may be used singly or in a combination of two kinds or more.

Adhesive Dispersion

The water dispersion type adhesive and the organic solvent type adhesive of the resin composition in the present invention are excellent in the adhesive strength, heat sealing strength and coated film properties (adhesiveness and the likes, when used as an adhesive for the polyolefins themselves, metals themselves, polyolefins and metals, polyolefins and various plastic materials such as polyesters, polyamides and polystyrenes; a heat seal material, and adhesives, coating sealing materials and paints for metals and plastic materials (such as polyolefins). The hot melt type adhesive of the resin composition in the present invention is provided for use, in which the resin composition of the present invention is heated to melt and applied by a conventional method to a coating substrate such as metal, metallic film, glass, wood, paper, cloth, aluminum foil, engineering plastic, rubber, polyolefin film or polyester film to form an adhesive layer. The resin composition of the present invention can also be used as a resin for pressure sensitive adhesives, printing inks and paints in addition to the use as an adhesive.

The present invention is further specifically described below based on Examples, but not limited by such Examples.

Various physical properties in the present Examples are measured as follows.

(i) Measurement of Molecular Weight and Molecular Weight Distribution

Molecular weight and molecular weight distribution were measured by gel permeation chromatography (GPC) under the following conditions.
Measurement instrument: Alliance GPC 2000 made by Waters Corporation
Analytical instrument: Empower Professional made by Waters Corporation
Columns: TSK gel GMH6HT x 2 + TSK gel GMH6HTL x 2
Column temperature: 140°C
Mobile phase: o-Dichlorobenzene (ODCB)
Detector: Differential refractometer
Flow rate: 1 mL/min
Sample concentration: 30 mg/20 mL of ODCB
Injection volume: 500 $\mu$L
Column calibration: Monodispersed polystyrene (made by Tosoh Corporation)

(ii) Measurement of Proton NMR

Measurement instrument: JNMGSX-400 Nuclear Magnetic Resonance Instrument made by JEOL Ltd.
Sample tube: diameter, 5 mm
Solvent for measurement: o-dichlorobenzene-d2 or 1,1,2,2-tetrachloroethane-d4
Measurement temperature: 120°C
Measurement sweep width: 8,000 Hz
Pulse width: 7.7 $\mu$s (45°)
Pulse interval: 6.0 s
Scans: around 8,000
Chemical shifts in each peak were determined based on that the upfield side proton of o-dichlorobenzene-d2 is 6.90 ppm or the proton of 1,1,2,2-tetrachloroethane-$d_4$ is 5.95 ppm.

[Manufacture Example 1]

An ethylene/10-undecen-1-ol copolymerized polymer (Mw = 60, 300, Mw/Mn =2.1 and comonomer content = 0.20 mol%) manufactured by the method according to the description of Japanese Patent Laid-Open Publication No. 2002-145944 was placed in a glass reaction vessel, to which hexane was added to adjust the polymer concentration to 100 g/L to form a slurry. Five equivalents of 2-bromoisobutyryl bromide relative to the amount of the hydroxyl group present in the polymer were added and the mixture was heated to 60°C and was stirred for 3 hours. The reaction solution was cooled at a cooling rate of 20°C/h to 20°C and the polymer was separated by filtration. The polymer was added again to acetone and the resultant mixture was stirred for 10 minutes to wash by solid-liquid washing and then filtered again for collection. The polymer in white color obtained was dried under the conditions at 50°C and reduced pressure of 10 Torr for 10 hours. The results of $^1$H-NMR measurement indicated that a polyethylene, wherein 92% of the hydroxyl group was modified with the 2-bromoisobutyryloxy group, was obtained. This halogenated polyethylene was placed in a glass polymerization vessel, to which a toluene solution of n-butyl acrylate (nBA) and glycidyl methacrylate (GMA) with each concentration adjusted to 3. 0 M and 0. 30 M, respectively, was added such that the polymer concentration was adjusted to 82 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polyethylene, and the resultant mixture was heated with stirring. The mixture was polymerized at 75°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was a graft polymer (G-1) composed of a polyethylene segment and poly(n-butyl acrylate-co-glycidyl methacrylate) in a ratio of 58:42 (weight ratio). It was further confirmed by an analysis of the monomer composition (molar ratio) in the poly(n-butyl acrylate-co-glycidyl methacrylate) segment that the epoxy group-containing GMA was introduced in a ratio of nBA: GMA = 86: 15. The values of Tm and Tg of each segment measured by DSC and [B'] / [B] obtained by acetone extraction in a Soxhlet extractor and a $^1$H-NMR analysis are summarized in Table 1.

[Manufacture Example 2]

A propylene/10-undecen-1-ol copolymerized polymer (Mw = 106,000, Mw/Mn = 1.9, comonomer content = 0.12 mol%) manufactured by the method according to the description of Japanese Patent Laid-Open Publication No. 2002-145944 was placed in a glass reaction vessel, to which hexane was added to adjust the polymer concentration to 100 g/L to form a slurry. Five equivalents of 2-bromoisobutyryl bromide relative to the amount of the hydroxyl group present in the polymer were added and the mixture was heated to 60°C and was stirred for 3 hours. The reaction solution was cooled at a cooling rate of 20°C/h to 20°C and the polymer was separated by filtration. The polymer was added again to acetone and the mixture was stirred for 10 minutes to wash by solid-liquid washing and then filtered again for collection. A polymer in white color obtained was dried under the conditions at 50°C and reduced pressure of 10 Torr for 10 hours. The results of $^1$H-NMR measurement indicated that the polypropylene, wherein 94% of the hydroxyl group was modified with the 2-bromoisobutyryloxy group, was obtained. This halogenated polypropylene was placed in a glass polymerization vessel, to which a toluene solution of n-butyl acrylate (nBA) and 2-hydroxyethyl methacrylate (HEMA) with each concentration adjusted to 3.4 M and 0. 30 M, respectively, was added such that the polymer concentration was adjusted to 83 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 80°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-2) composed of the polypropylene segment and poly (n-butyl acrylate-co-2-hydroxyethyl methacrylate) in a ratio of 73:27 (weight ratio). It was further confirmed by an analysis of the monomer composition (molar ratio) in the poly (n-butyl acrylate-co-2-hydroxyethyl methacrylate) segment that the hydroxyl group-containing HEMA was introduced in a ratio of nBA:HEMA = 85:15. The values of Tm and Tg of each segment by DSC and [B'] / [B] obtained by acetone extraction in a Soxhlet extractor and a $^1$H-NMR analysis are summarized in Table 1.

[Manufacture Example 3]

Polypropylene (S119 made by Prime Polymer Co., Ltd.) was placed in a glass reaction vessel, to which chlorobenzene was added to adjust the polymer concentration to 100 g/L and the mixture was heated with stirring at 120°C for 2 hours. Subsequently, 2.5 parts by weight of N-bromosuccinimide relative to 100 parts by weight of the polypropylene was then added and the reaction was carried out at 100°C for 2 hours in a form of a solution. The reaction solution was poured into a large volume of acetone to precipitate a polymer, which was filtered. The polymer was added again to acetone and the mixture was stirred for 10 minutes for the solid-liquid washing and then filtered again for collection to dry under the conditions at 80°C and a reduced pressure of 10 Torr for 10 hours. The content of bromine atom contained in the polymer obtained was 0.55% by weight by ion chromatography analysis. The molecular weight of the polymer (relative to PP standards) was measured by GPC to give Mw = 101,000, Mn = 43,000 and Mw/Mn = 2.35. This halogenated polypropylene was placed in a glass polymerization vessel, to which a toluene solution of n-butyl acrylate (nBA) and 2-hydroxyethyl methacrylate (HEMA) with each concentration adjusted to 3. 4 M and 0.30 M, respectively, was added such that the polymer concentration was adjusted to 83 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 80°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-3) composed of the polypropylene segment and poly(n-butyl acrylate-co-2-hydroxyethyl methacrylate) in a ratio of 77:23 (weight ratio) . It was further confirmed by an analysis of the monomer composition (molar ratio) in the poly(n-butyl acrylate-co-2-hydroxyethyl methacrylate) segment that the hydroxyl group-containing HEMA was introduced in a ratio of nBA: HEMA = 85:15. The values of Tm and Tg of each segment by DSC and [B'] / [B] obtained by acetone extraction in a Soxhlet extractor and a $^1$H-NMR analysis are summarized in Table 1.

[Manufacture Example 4]

The halogenated polypropylene synthesized by the method according to Manufacture Example 2 was placed in a glass polymerization vessel, to which a toluene solution of n-butyl acrylate (nBA) and glycidyl methacrylate (GMA) with each concentration adjusted to 3.0 M and 0.30 M, respectively, was added such that the polymer concentration was adjusted to 93 g/L, into which nitrogen gas was bubbled as deoxygenation operation. A toluene solution of copper (I) bromide and N,N,N',N",N"-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 75°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-4) composed of the polypropylene segment and poly(n-butyl acrylate-co-glycidyl methacrylate) in a ratio of 57:43 (weight ratio). It was further confirmed by an analysis of the monomer composition (molar ratio) in the poly(n-butyl acrylate-co-glycidyl methacrylate) segment as the reactive segment that the epoxy group-containing GMA was introduced in a ratio of nBA: GMA = 81:19. The values of Tm and Tg of each segment by DSC and [B']/[B] obtained by acetone extraction in a Soxhlet extractor and a $^1$H-NMR analysis are summarized in Table 1.
A phase structure of the present polymer by a transmission electron micrograph is shown in Figure 1. It was confirmed that the phase of the poly(n-butyl acrylate-co-glycidyl methacrylate) segment which is more likely to be stained with ruthenium oxide is dispersed in an average particle diameter of approximately 20 nm.

[Manufacture Example 5]

The halogenated polypropylene synthesized by the method according to Manufacture Example 3 was placed in a glass polymerization vessel, to which a toluene solution of n-butyl acrylate (nBA) and glycidyl methacrylate (GMA) with each concentration adjusted to 3. 0 M and 0. 30 M, respectively, was added such that the polymer concentration was adjusted to 93 g/L, into which nitrogen gas was bubbled as deoxygenation operation. A toluene solution of copper (I) bromide and N,N,N',N",N"-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 75°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-5) composed of the polypropylene segment and poly(n-butyl acrylate-co-glycidyl-methacrylate) in a ratio of 61:39 (weight ratio). It was further confirmed by an analysis of the monomer composition (molar ratio) in the poly(n-butyl acrylate-co-glycidyl methacrylate) segment as the reactive segment that the epoxy group-containing GMA was introduced in a ratio of nBA:GMA = 80:20. The values of Tm and Tg of each segment by DSC and [B']/[B] obtained by acetone extraction in a Soxhlet extractor and $^1$H-NMR analysis are summarized in Table 1.

[Manufacture Example 6]

The halogenated polypropylene obtained by the method according to Manufacture Example 2 was placed in a glass polymerization vessel, to which a toluene solution of 2-ethylhexyl acrylate-(2-EHA) and glycidyl methacrylate (GMA) with each concentration adjusted to 3.4 M and 0. 30 M, respectively, was added such that the polymer concentration was adjusted to 93 g/L, into which nitrogen gas was bubbled as deoxygenation operation. A toluene solution of copper (I) bromide and N,N,N',N",N"-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 80°C for 1.0 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-6) composed of the polypropylene segment and poly(2-ethylhexyl acrylate-co-glycidyl methacrylate) in a ratio of 58:42 (weight ratio). It was further confirmed by an analysis of the monomer composition (molar ratio) in the poly (2-ethylhexyl acrylate-co-glycidyl methacrylate) segment that the epoxy group-containing GMA was introduced in a ratio of nBA: GMA = 81:19. The values of Tm and Tg of each segment by DSC and [B'] / [B] obtained by acetone extraction in a Soxhlet extractor and a $^1$H-NMR analysis are summarized in Table 1.

[Manufacture Example 7]

The halogenated polypropylene synthesized by the method according to Manufacture Example 2 was placed in a glass polymerization vessel, to which a toluene solution of n-butyl acrylate (nBA) and 2-isocyanatoethyl acrylate (Karenz AOI made by Showa Denko KK) with each concentration adjusted to 3.0 M and 0.30 M, respectively, was added such that the polymer concentration was adjusted to 93 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 75°C for 3 hours, chilled with an ice bath, and the resultant polymer was filtered and washed with methanol. The polymer obtained was dried at 80°C under reduced pressure to yield a polymer in white color. It was confirmed by a $^1$H-NMR measurement that the polymer was the graft polymer (G-7) composed of the polypropylene segment and poly(n-butyl acrylate-co-2-isocyanatoethyl acrylate) in a ratio of 71:29 (weight ratio). The introduction of the isocyanate group was confirmed by an infrared (IR) absorption analysis. The values of Tm and Tg of each segment by DSC and [B'] / [B] obtained by acetone extraction in a Soxhlet extractor and a $^1$H-NMR analysis are summarized in Table 1.

[Manufacture Example 8]

The halogenated polypropylene synthesized by the method according to Manufacture Example 2 was placed in a glass polymerization vessel, to which a toluene solutions of n-butyl acrylate (nBA) and t-butyl acrylate (tBA) with each concentration adjusted to 3.0 M and 0.30 M, respectively, was added such that the polymer concentration was adjusted to 93 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 80°C for 3 hours, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-8) composed of the polypropylene segment and poly(n-butyl acrylate-co-(2-isocyanatoethyl) acrylate) in a ratio of 82:18 (weight ratio). The monomer composition in the poly(n-butyl acrylate-co-t-butyl acrylate) segment was further confirmed to be nBA:tBA = 93:7.
A part of the polymer was placed in a pear-shaped flask to disperse in a mixed solvent of toluene:trifluoroacetic acid:pure water = 80: 18:2 (volume ratio). The mixture was stirred at 75°C for 3 hours and then cooled to filter, washed with acetone and dried to obtain a polymer in white color. The results of a $^1$H-NMR analysis indicated that the polymer had a structure in which 80% of the t-butyl group derived from the poly(t-butyl acrylate) was hydrolyzed and converted to the carboxylic acid. The values of Tm and Tg of each segment by DSC and [B'] / [B] obtained by acetone extraction in a Soxhlet extractor and a $^1$H-NMR analysis are summarized in Table 1.

[Manufacture Example 9]

The halogenated polypropylene synthesized by the method according to Manufacture Example 2 was placed in a glass polymerization vessel, to which a toluene solution of n-butyl acrylate (nBA) and maleic anhydride (MAH) with each concentration adjusted to 3.2 M and 0.40 M, respectively, was added such that the polymer concentration was adjusted to 89 g/L, into which nitrogen gas was bubbled as deoxygenation operation. A half equivalent of cyclopentadienyl iron (I) dicarbonyl dimer as a catalyst was then added relative to a total halogen content of the halogenated polypropylene as a raw material and the mixture was heated with stirring. The mixture was polymerized at 60°C for 3 hours, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-9) composed of the polypropylene segment and poly (n-butyl acrylate-co-maleic anhydride) in a ratio of 91: 9 (weight ratio). The monomer composition in the poly(n-butyl acrylate-co-maleic anhydride) segment was further confirmed to be nBA:tBU = 93:7.
A part of the present polymer was placed in a pear-shaped flask to disperse in a mixed solvent of toluene: trifluoroacetic acid:pure water = 80:18:2 (volume ratio) . The mixture was stirred at 75°C for 3 hours and then cooled to filter, wash with acetone and dry to obtain a polymer in white color. The results of an $^1$H-NMR analysis indicated that the polymer had a structure in which 80% of the t-butyl group derived from the poly(t-butyl acrylate) was hydrolyzed and converted to the carboxylic acid. The values of Tm and Tg of each segment by DSC and [B'] / [B] obtained by acetone extraction in a Soxhlet extractor and a $^1$H-NMR analysis are summarized in Table 1.

[Manufacture Example 10]

5 g of polypropylene-g-poly(n-butyl acrylate-co-2-hydroxyethyl methacrylate) [(PP-g-P(nBA-co-HEMA)] obtained in Manufacture Example 2 and 0.5 g of pyromellitic dianhydride were charged into a reaction vessel to disperse in 50 mL of dimethylacetamide. The mixture was heated with stirring at 120°C for 4 hours. After cooled to room temperature, the mixture was poured into 500 mL of THF, and unreacted pyromellitic acid was removed by filtration. The residue was dried under reduced pressure to obtain the graft polymer (G-10) in white color. The absorption due to the acid anhydride group and the carboxyl group was confirmed by an IR absorption analysis. The values of Tm and Tg of each segment by DSC and [B'] / [B] obtained by acetone extraction in a Soxhlet extractor and a $^1$H-NMR analysis are summarized in Table 1.

[Manufacture Example 11]

The halogenated polypropylene synthesized by the method according to Manufacture Example 2 was placed in a glass polymerization vessel, to which a toluene solution of n-butyl acrylate (nBA) and 2-isopropenyl-2-oxozaline (OZ) with each concentration adjusted to 2.7 M and 0.3 M, respectively, was added such that the polymer concentration was adjusted to 89 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 60°C for 3 hours, chilled with an ice bath, and the resultant polymer was filtered and washed with methanol. The polymer obtained was dried at 80°C under reduced pressure to obtain a polymer in white color. From the yield, it was confirmed that the polymer was the graft polymer (G-11) composed of the polypropylene segment and poly(n-butyl acrylate-co-(2-isopropenyl-2-oxazoline) in a ratio of 90: 10 (weight ratio).

[Manufacture Example 12]

The halogenated polypropylene synthesized by the method according to Manufacture Example 2 was placed in a glass polymerization vessel, to which a toluene solutions of n-butyl acrylate (nBA) and acid phosphoxyethyl methacrylate (PHO) with each concentration adjusted to 2.7 M and 0.3 M, respectively, was added such that the polymer concentration was adjusted to 89 g/L, into which nitrogen gas was bubbled as deoxygenation operation. A toluene solution of copper (I) bromide and N,N,N',N'',N''-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 60°C for 7 hours, chilled with an ice bath, and the resultant polymer was filtered and washed with methanol. The polymer obtained was dried at 80°C under reduced pressure to obtain a polymer in white color. From the yield, it was confirmed that the polymer was the graft polymer (G-12) composed of the polypropylene segment and poly(n-butyl acrylate-co- (acid phosphoxyethyl methacrylate) in a ratio of 89: 9 (weight ratio).

[Manufacture Example 13]

The halogenated polypropylene synthesized by the method according to Manufacture Example 2 was placed in a glass polymerization vessel, to which a toluene solution of n-butyl acrylate (nBA) and isoprene (IPN) with each concentration adjusted to 3.2 M and 0.4 M, respectively, was added such that the polymer concentration was adjusted to 89 g/L, into which nitrogen gas was bubbled as deoxygenation operation. A half equivalent of cyclopentadienyl iron (I) dicarbonyl dimer as a catalyst was then added relative to a total halogen content of the halogenated polypropylene as a raw material and the mixture was heated with stirring. The mixture was polymerized at 60°C for 4 hours, chilled with an ice bath, and the resultant polymer was filtered and washed with methanol. The polymer obtained was dried at 80°C under reduced pressure to obtain a polymer in white color. It was confirmed by a $^1$H-NMR measurement that the graft polymer (prepolymer-1) composed of the polypropylene segment and poly(n-butyl acrylate-co-isoprene) segment in a ratio of 75:25 (weight ratio) was obtained. Into a 200 ml four-necked flask were subsequently charged 7.0 g of this prepolymer-1, 70 g of toluene, 3.5 g (35.9 mmol) of 35% hydrogen peroxide, 0.236 g (0.72 mmol) of sodium tungstate dihydrate ($Na_2WO_4.2H_2O$), 0.167 g (0.36 mmol) of methyltri (n-octyl) ammonium sulfate ($CH_3$ (n-$C_8H_{17}$)$_3$N.HSO$_4$) and 0.041g (0.36 mmol) of 85% phosphoric acid. The resultant mixture was heated to 90°C and reaction was carried out for 8 hours, and the reaction was quenched by adding a 40% sodium thiosulfate aqueous solution gradually at this temperature to the reaction liquid. After the reaction liquid was cooled, acetone was added to the reaction liquid and crystals were separated by filtration, which were then washed and dried under reduced pressure to obtain 6.7 g of the epoxy group-containing graft polymer (G-13). It was confirmed by a $^1$H-NMR analysis that the unsaturated carbon-carbon bond derived from the isoprene was epoxidized.

[Manufacture Example 14]

Into a four-necked flask equipped with a condenser were charged the halogenated polypropylene synthesized by the method according to Manufacture Example 2 at concentration of 60.0 g/L, n-butyl acrylate at concentration of 495 ml/L, 4-(4-vinylphenyl)-1-butene at concentration of 210 ml/L and acetone at concentration of 295 ml/L. After bubbling nitrogen through the resultant mixture for 30 minutes, a separately prepared toluene solution of N,N,N',N'',N''-pentamethyldiethylenetriamine at 0.8 mol/L and copper (I) bromide was added to the mixture at the concentration of 25 mL/L, and the reaction was carried out at 55°C for 8 hours. The reaction liquid was filtered to isolate a solid substance, which was washed with acetone several times and dried at 60°C under reduced pressure to obtain 57.7 g of the graft polymer (prepolymer-2) composed of the polypropylene segment and poly(n-butyl acrylate-co-(4-(4-vinylphenyl)-1-butene). Subsequently, 7.0 g of the prepolymer-2, 70 g of toluene, 3.5 g (35.9 mmol) of 35% hydrogen peroxide, 0.236g (0.72 mmol) of sodium tungstate dihydrate ($Na_2WO_4.2H_2O$) , 0.167 g (0.36 mmol) of methyltri (n-octyl) ammonium sulfate ($CH_3(n-C_8H_{17})_3N.HSO_4$) and 0.041 g (0.36 mmol) of 85% phosphoric acid ($H_3PO_4$) were charged into a 200 mL four-necked flask. The mixture was heated to 90°C and the reaction was carried out for 8 hours. The reaction was quenched by adding a 40% sodium thiosulfate aqueous solution gradually to the reaction liquid at the temperature. After the reaction liquid was cooled, acetone was added to the reaction liquid and crystals were separated by filtration, and then the crystals were washed and dried under reduced pressure to obtain 6.9 g of the epoxy group-containing graft polymer (G-14) . It was confirmed by an $^1$H-NMR analysis that the vinyl group derived from 4-(4-vinylphenyl)-1-butene was epoxidized. (Here, 4-(4-vinylphenyl)-1-butene used in the polymerization was synthesized by the method according to a non-patent document, Macromolecules 32, (1999), 5495).

[Manufacture Example 15]

Into a four-necked flask equipped with a condenser were charged the halogenated polypropylene synthesized by the method according to Manufacture Example 2 at concentration of 60.0 g/L, n-butyl acrylate at concentration of 495 ml/L, styrene oxide at concentration of 210 ml/L and acetone at concentration of 295 ml/L. After bubbling nitrogen through the resultant mixture for 30 minutes, and a separately prepared toluene solution of N,N,N',N'',N''-pentamethyldiethylenetriamine at 0.8 mol/L and copper (I) bromide was added to the mixture at the concentration of 25 mL/L, and the reaction was carried out at 55°C for 8 hours. The reaction liquid was filtered to isolate a solid substance, which was washed with acetone several times and dried at 60°C under reduced pressure to obtain 54.6 g of the graft polymer (G-15) composed of the polypropylene segment and poly(n-butyl acrylate-co-styrene oxide). A polymer analysis by an $^1$H-NMR indicated that a weight ratio of the main chain polypropylene segment to the side chain epoxy group-containing polar segment was 91:9.
(Here, styrene oxide (a mixture of m- and p-isomers) described in the Manufacture Example was synthesized by the method described in Polymer, 40, (1999, 2441)).

[Manufacture Example 16]

5.0 g of the prepolymer-2 according to Manufacture Example 14 and 4.5 g of toluene were charged under a stream of nitrogen gas into a four-necked flask equipped with a condenser, and the temperature of the flask was raised to 110°C. A mixture of 0.115 mg (1.0 mmol) of triethylamine borane ($BH_3.Et_3N$) and 292 mg (2.0 mmol) of triethyl borate ($B(OEt)_3$) was gradually added at this temperature to the reaction liquid. After further stirring the resultant mixture for 10 hours, it was cooled to room temperature and acetone was added. The reaction liquid was filtered and a solid substance separated by filtration was then washed with acetone several times and dried at 60°C under reduced pressure to obtain 4.8 g of the graft polymer (G-16), in which the diester of boric acid was introduced into the side chain. A polymer analysis by an $^1$H-NMR indicated that a weight ratio of the main chain polypropylene segment to the side chain boric acid-containing polar segment was 87:12.

[Manufacture Example 17]

A similar operation to Manufacture Example 16 was carried out except that triethyl borate $B(OEt)_3$ was not added but a 50% aqueous acetone solution in the post-treatment was used to obtain 4.5 g of the graft polymer (G-17) in which the diester of boric acid was introduced into the side chain. A polymer analysis by an $^1$H-NMR indicated that a weight ratio of the main chain polypropylene segment to the side chain boric acid-containing polar segment was 87:13.

[Manufacture Example 18]

Poly(4-methyl-1-pentene) (TPX MX004 made by Mitsui Chemicals Inc.) was placed in a glass reaction vessel, to which chlorobenzene was added to adjust the polymer concentration to 100 g/L and the resultant mixture was heated with stirring at 100°C for 2 hours. To 100 parts by weight of poly (4-methyl-1-pentene), 2.5 parts by weight of N-bromosuccinimide was thereafter added and the reaction was carried out at 100°C for 2 hours in a form of the solution. The reaction liquid was poured into 4 L of acetone to precipitate the polymer, which was filbered. The polymer was added again to acetone and was stirred for 10 minutes for solid-liquid washing and filtered again to dry under the conditions at 80°C and reduced pressure of 10 Torr for 10 hours. The content of the bromine atom present in the polymer obtained was 0.31% by weight by ion chromatography analysis. The molecular weight of the polymer by GPC gave Mw = 415,000, Mn = 100,000 and Mw/Mn = 4.13. This halogenated poly(4-methyl-1-pentene) was placed in a glass polymerization vessel, to which a toluene solution of n-butyl acrylate (nBA) and 2-hydroxyethyl methacrylate (HEMA) with each concentration adjusted to 3.4 M and 0.30 M, respectively, was added such that the polymer concentration was adjusted to 83 g/L, into which nitrogen gas was bubbled as deoxygenation operation. A toluene solution of copper (I) bromide and N,N,N',N",N"-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 80°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-18) composed of the poly(4-methyl-1-pentene) segment and poly(n-butyl acrylate-co-2-hydroxyethyl methacrylate) in a ratio of 58:42. It was further confirmed by an analysis of the monomer composition (molar ratio) in the poly(n-butyl acrylate-co-2-hydroxyethyl methacrylate) segment that the hydroxyl group-containing HEMA was introduced in a ratio of nBA:HEMA = 85:15. The values of Tm and Tg of each segment by DSC and [B']/[B] obtained by acetone extraction in a Soxhlet extractor and an $^1$H-NMR analysis are summarized in Table 1.

[Manufacture Example 19]

150 g of EBR (TAFMER A0550 made by Mitsui Chemical Inc.) and 1800 mL of chlorobenzene were charged into a glass reaction vessel with an inner volume of 2L sufficiently replaced with nitrogen gas and the mixture was heated with stirring at 100°C for 2 hours. To the mixture 5 grams of N-bromosuccinimide was then added and the reaction was carried out at 100°C for 2 hours in a form of the solution. The reaction liquid was poured into 4 L of acetone to precipitate a polymer, which was dried under reduced pressure to obtain 146. 3 g of rubbery modified EBR in brown color. The content of the bromine atom present in the polymer obtained was 0.58% by weight by ion chromatography analysis. The molecular weight (relative to PS standards) of the polymer by GPC gave Mw = 185,000, Mn = 89,400 and Mw/Mn = 2.07. The brominated EBR thus obtained was placed in a glass polymerization vessel, to which a toluene solution of n-butyl acrylate (nBA) and glycidyl methacrylate (GMA) with each concentration adjusted to 3.0 M and 0.30 M, respectively, was added such that the polymer concentration was adjusted to 93 g/L, into which nitrogen gas was bubbled as deoxygenation operation. A toluene solution of copper (I) bromide and N,N,N',N",N"-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 75°C for 4 hours, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-19) composed of the EBR segment and poly(n-butyl acrylate-co-glycidyl methacrylate) in a ratio of 75:25 (weight ratio). It was further confirmed by an analysis of the monomer composition (molar ratio) in the poly(n-butyl acrylate-co-glycidyl methacrylate) segment as the reactive segment that the epoxy group-containing GMA was introduced in a ratio of nBA: GMA = 82:18. The values of Tm and Tg of each segment by DSC and [B']/[B] obtained by acetone extraction in a Soxhlet extractor and an $^1$H-NMR analysis are summarized in Table 1.

[Manufacture Example 20]

A similar operation to Manufacture Example 4 was carried out except that the concentrations of n-butyl acrylate (nBA) and glycidyl methacrylate (GMA) in polymerization were adjusted to 0.75 M and 0. 075 M, respectively to obtain a polymer in white color. It was confirmed by a $^1$H-NMR measurement that the polymer was the graft polymer (G-20) composed of the polypropylene segment and poly(n-butyl acrylate-co-glycidyl methacrylate) in a ratio of 90:10 (weight ratio). It was further confirmed by an analysis of the monomer composition (molar ratio) in the poly(n-butyl acrylate-co-glycidyl methacrylate) segment as the reactive segment that the epoxy group-containing GMA was introduced in a ratio of nBA:GMA = 80:20. The values of Tm and Tg of each segment by DSC and [B']/[B] obtained by acetone extraction in a Soxhlet extractor and an $^1$H-NMR analysis are summarized in Table 1.

[Manufacture Example 21]

Olefin Polymer without Reactive Group G-21

The halogenated polypropylene synthesized by the method according to Manufacture Example 2 was placed in a glass polymerization vessel, to which a toluene solution of methyl methacrylate (MMA) with the concentration adjusted to 3.0 M was added such that the polymer concentration was adjusted to 93 g/L, into which nitrogen gas was bubbled for deoxygenation operation. A toluene solution of copper (I) bromide and N,N,N',N",N"-pentamethyldiethylenetriamine (PMDETA) in a ratio of 1:2 (molar ratio) was then added in the quantity of two equivalents of copper (I) bromide relative to the halogen content of the halogenated polypropylene and the mixture was heated with stirring. The mixture was polymerized at 75°C for 1 hour, chilled with an ice bath, and the resultant polymer was filtered and washed with methanol. The polymer obtained was dried at 80°C under reduced pressure to obtain a polymer in white color. It was confirmed by a $^1$H-NMR measurement that the polymer was the graft polymer (G-21) composed of the polypropylene segment and polymethyl methacrylate (MMA) in a ratio of 69:39 (weight ratio). The polymer without reactive group in the addition polymer segment (B) was thus obtained. The values of Tm and Tg of each segment by DSC and [B']/[B] obtained by acetone extraction in a Soxhlet extractor and an $^1$H-NMR analysis are summarized in Table 1.

[Manufacture Example 22]

Olefin Polymer without Reactive Group G-22

The monomers were polymerized similarly to the method in Manufacture Example 4 except that glycidyl methacrylate was not added to the polymerization monomers, yielding a polymer in white color. It was confirmed by a $^1$H-NMR measurement that the polymer was the graft polymer (G-22) composed of the polypropylene segment and poly (n-butyl acrylate) (nBA) in a ratio of 64: 36 (weight ratio). The polymer without reactive group in the addition polymer segment (B) was thus obtained. The values of Tm and Tg of each segment by DSC and [B']/[B] obtained by acetone extraction in a Soxhlet extractor and an $^1$H-NMR analysis are summarized in Table 1.

[Table 1]

| Table 1 Olefin Polymers Synthesized | | | | | | | |
|---|---|---|---|---|---|---|---|
| Olefin Polymers | Manufacture Example | Segment (A) | | Segment (B) | | | [B']/[B] |
| | | Kinds | Tm | Kinds | Tg | Reactive Group | |
| G-1 | 1 | PE | 135 | P(nBA-co-GMA) | -35 | Epoxy Group | 0.06 |
| G-2 | 2 | PP | 159 | P(nBA-co-HEMA) | -37 | Hydroxyl Group | 0.03 |
| G-3- | 3 | PP | 159 | P(nBA-co-HEMA) | -32 | Hydroxyl Group | 0.08 |
| G-4 | 4 | PP | 159 | P(nBA-co-GMA) | -32 | Epoxy Group | 0.05 |
| G-5 | 5 | PP | 159 | P(nBA-co-GMA) | -33 | Epoxy Group | 0.17 |
| G-6 | 6 | PP | 159 | P(2EHA-co-GMA) | -38 | Epoxy Group | 0.05 |
| G-7 | 7 | PP | 159 | P(nBA-co-2-IEA) | -30 | Isocyanate Group | 0.04 |
| G-8 | 8 | PP | 159 | P(nBA-co-AA) | -45 | Carboxyl Group | 0.04 |
| G-9 | 9 | PP | 159 | P(nBA-co-MAH) | -38 | Acid anhydride Group | 0.05 |

(continued)

| Table 1 Olefin Polymers Synthesized | | | | | | | |
|---|---|---|---|---|---|---|---|
| Olefin Polymers | Manufacture Example | Segment (A) | | Segment (B) | | | [B']/[B] |
| | | Kinds | Tm | Kinds | Tg | Reactive Group | |
| G-10 | 10 | PP | 159 | P(nBA-co-HEMA) modified by pyromellitic acid | -15 | Carboxyl Group and Acid anhydride Group | 0.03 |
| G-11 | 11 | PP | 159 | P(nBA-co-OZ) | -26 | Oxazoline Group | 0.03 |
| G-12 | 12 | PP | 159 | P(nBA-co-PHO) | n.d. | Phosphoric acid Group | 0.02 |
| G-13 | 13 | PP | 159 | Epoxidized P (nBA-co-IPN) | -20 | Epoxy Group | 0.02 |
| G-14 | 14 | PP | 159 | Epoxidized P (nBA-co-VPB) | -32 | Epoxy Group | 0.03 |
| G-15 | 15 | PP | 159 | P(nBA-co-ESt) | -20 | Epoxy Group | 0.02 |
| G-16 | 16 | PP | 159 | P(nBA-co-VPN) modified by borate ester | -29 | Borate ester Group | 0.03 |
| G-17 | 17 | PP | 159 | P(nBA-co-VPN) modified by boric acid | -30 | Boric acid Group | 0.06 |
| G-18 | 18 | P(4-M P-1) | 217 | P(nBA-co-HEMA) | -32 | Hydroxyl Group | 0.04 |
| G-19 | 19 | EBR | n.d. | P(nBA-co-GMA) | -35 | Epoxy Group | 0.02 |
| G-20 | 20 | PP | 159 | P(nBA-co-GMA) | -27 | Epoxy Group | 0.01 |
| G-21 | 21 | PP | 159 | PMMA | 95 | None | 0.05 |
| G-22 | 22 | PP | 159 | PnBA | -52 | None | 0.05 |

[Examples 1 to 17]

Evaluation of Adhesion Performance of Olefin Polymers

Adhesiveness of the olefin polymers (G-1 to G-17) according to Manufacture Examples 1 to 17 to an adherend was evaluated using an aluminum film as the adherend.

A commercially available 100 $\mu$m thick sheet was used as the aluminum film. Both sides of a 100 $\mu$m thick Teflon (registered trademark) spacer (size of the hollow space, 4.0 cm x 4.0 cm) were sandwiched between the aluminum films and the hollow space of the spacer was filled with 0.6 g of the olefin polymers (G-1 to G-17) according to Manufacture Examples 1 to 17. Both sides of this specimen were further sandwiched between iron plates (thickness, 2 mm), which were pressed with a press molding machine to adhere the aluminum film to the olefin polymer under pressure and heat.

The press molding was performed under the conditions including a preheating step at 200°C x 60 seconds, a pressing step at 240°C x 120 seconds (pressure = 50 kgf/cm$^2$) and a cooling step with a water-cooled press for 60 seconds (pressure = 10 kgf/cm$^2$). Peeling was evaluated using the adhesion specimen thus obtained and visually observing a state of peeling in the T-shape peeling test. When the olefin polymer was broken (cohesive failure) or the adherend was broken upon peeling, this indicates good adhesion of the adhesive thermoplastic resin to the aluminum film, hence this state of peeling was rated as "good". When the peeling was observed at the interface between the olefin polymer and the aluminum film, this indicates poor adhesion between the both materials, hence rated as "poor". The results of the evaluation of the peeling are shown in Table 2.

[Example 18]

Evaluation of Adhesion Performance of Olefin Polymers

Adhesiveness of the olefin polymer (G-18) according to Manufacture Example 18 to the adherend was evaluated using the aluminum film as the adherend.

A commercially available 100 $\mu$m thick sheet was used as the aluminum film. Both sides of a 100 $\mu$m thick Teflon (registered trademark) spacer (size of the hollow space, 4.0 cm x 4.0 cm) were sandwiched between the aluminum films and the hollow space of the spacer was filled with 0. 6 g of the olefin polymer (G18) according to Manufacture Example 18. Both sides of this specimen were further sandwiched between iron plates (thickness, 2 mm), which were pressed with a press molding machine to adhere the aluminum film to the polyolefin polymer under pressure and heat.

The press molding was performed under the conditions including a preheating step at 240°C x 60 seconds, a pressing step at 240°C x 120 seconds (pressure = 50 kgf/cm$^2$) and a cooling step with a water-cooled press for 60 seconds (pressure = 10 kgf/cm$^2$). Peeling of the adhesion specimen thus obtained was evaluated by the similar method as that in Examples 1 to 17. The results of the peeling evaluation are shown in Table 2.

[Examples 19 to 20]

Evaluation of Adhesion Performance of Olefin Polymers

Adhesiveness of the olefin polymers (G-19 and G-20) according to Manufacture Examples 19 to 20 to the adherend was evaluated using the aluminum film as the adherend.

A commercially available 100 $\mu$m thick sheet was used as the aluminum film. Both sides of a 100 $\mu$m thick Teflon (registered trademark) spacer (size of the hollow space, 4.0 cm x 4.0 cm) were sandwiched between the aluminum films and the void of the spacer was filled with 0.6 g of the adhesive thermoplastic resins according to Manufacture Examples 19 and 20. Both sides of this specimen were further sandwiched between iron plates (thickness, 2 mm), which were pressed with a press molding machine to adhere the aluminum film to the adhesive thermoplastic resins under pressure and heat. Adhesiveness of the olefin polymers (G-19 and G-20) according to Manufacture Examples 19 and 20 to the aluminum film was evaluated.

A commercially available 100 $\mu$m thick sheet was used as the aluminum film. Both sides of a 100 $\mu$m thick Teflon (registered trademark) spacer (4.0 cm x 4.0 cm) were sandwiched between the aluminum films and the inside of the spacer was filled with 0.6 g of the adhesive thermoplastic resins according to Manufacture Examples 19 and 20. Both sides of this specimen were further sandwiched between iron plates (thickness, 2 mm) and pressed with a press molding machine to adhere the aluminum film to the olefin polymer under pressure and heat.

The press molding was performed under the conditions including a preheating step at 200°C x 60 seconds, a pressing step at 200°C x 120 seconds (pressure = 50 kgf/cm$^2$) and a cooling step with a water-cooled press for 60 seconds (pressure = 10 kgf/cm$^2$). Peeling of the adhesion specimen thus obtained was evaluated by the similarly method as that in Examples 1 to 17. The results of the peeling evaluation are shown in Table 2.

[Examples 21 to 24]

Evaluation of Adhesion Performance of Olefin Polymers

Adhesiveness of the olefin polymer (G-4) according to Manufacture Example 4 was evaluated using as an adherend a glass plate, a polyamide film, a polyvinyl alcohol film, a polyimide film and a PET film.

The adhesion specimens were molded by the similar method as that used in Examples 1 to 17. Peeling of the adhesion specimens obtained was evaluated by the similar method as that in Examples 1 to 17. The results of the peeling evaluation are shown in Table 2.

A microscope slide glass (thickness, 1.0 to 1.2 mm) was used as a glass plate.

Rayfan (trade name) made by Toray Industries, Inc. was used as a polyamide film.

Capton (trade name) made by Toray Industries, Inc. was used as a polyimide film.

Lumirror (trade name) made by Toray Industries, Inc. was used as a PET film.

[Comparative Examples 1 to 12]

Adhesiveness of the olefin polymer (G-21) according to Manufacture Example 21, the olefin polymer (G-22) according to Manufacture Example 22, maleic acid-modified polypropylene ([$\eta$] = 0.4, the amount of maleic acid grafted = 3.5% by weight) and glycidyl methacrylate-copolymerized polyethylene (Bondfast E made by Sumitomo Chemical Co., Ltd.) to an aluminum film, a PET film and a polyimide film was evaluated by the similar method as that in Examples 1 to 17. The results of the peeling evaluation are shown in Table 2.

[Table 2]

| Table 2 Results of the Evaluation of Adhesiveness of Olefin Polymers | | | |
|---|---|---|---|
| Example | Olefin Polymer | Adherend | State of Peeling |
| Example 1 | G-1 | Aluminum film | Good |
| Example 2 | G-2 | Aluminum film | Good |
| Example 3 | G-3 | Aluminum film | Good |
| Example 4 | G-4 | Aluminum film | Good |
| Example 5 | G-5 | Aluminum film | Good |
| Example 6 | G-6 | Aluminum film | Good |
| Example 7 | G-7 | Aluminum film | Good |
| Example 8 | G-8 | Aluminum film | Good |
| Example 9 | G-9 | Aluminum film | Good |
| Example 10 | G-10 | Aluminum film | Good |
| Example 11 | G-11 | Aluminum film | Good |
| Example 12 | G-12 | Aluminum film | Good |
| Example 13 | G-13 | Aluminum film | Good |
| Example 14 | G-14 | Aluminum film | Good |
| Example 15 | G-15 | Aluminum film | Good |
| Example 16 | G-16 | Aluminum film | Good |
| Example 17 | G-17 | Aluminum film | Good |
| Example 18 | G-18 | Aluminum film | Good |
| Example 19 | G-19 | Aluminum film | Good |
| Example 20 | G-20 | Aluminum film | Good |
| Example 21 | G-4 | Glass plate | Good |
| Example 22 | G-4 | Polyamide film | Good |
| Example 23 | G-4 | Polyimide film | Good |
| Example 24 | G-4 | PET film | Good |
| Comparative Example 1 | G-21 | Aluminum film | Poor |
| Comparative Example 2 | G-22 | Aluminum film | Poor |
| Comparative Example 3 | Maleinated PP | Aluminum film | Good |
| Comparative Example 4 | Bondfast E | Aluminum film | Good |
| Comparative Example 5 | G-21 | Polyimide film | Poor |
| Comparative Example 6 | G-22 | Polyimide film | Poor |
| Comparative Example 7 | Maleinated PP | Polyimide film | Poor |
| Comparative Example 8 | Bondfast E | Polyimide film | Poor |
| Comparative Example 9 | G-21 | PET film | Poor |
| Comparative Example 10 | G-22 | PET film | Poor |
| Comparative Example 11 | Maleinated PP | PET film | Poor |

(continued)

| Table 2 Results of the Evaluation of Adhesiveness of Olefin Polymers | | | |
|---|---|---|---|
| Example | Olefin Polymer | Adherend | State of Peeling |
| Comparative Example 12 | Bondfast E | PET film | Good |
| Good: Cohesive failure at the interface or breakdown of the adherend.<br>Poor: Peeled at the interface. | | | |

[Example 25]

Adhesion performance of the olefin polymer (G-4) according to Manufacture Example 4 to the PET film was evaluated.

[Molding of Laminated Product]

Lumirror (trade name) made by Toray Industries, Inc. was used as a PET film.

Both sides of a 100 μm thick aluminum spacer (20 cm x 20 cm) were sandwiched between 100 μm thick PET films and the inside of the spacer was filled with 8 g of the adhesive thermoplastic resin. Both side of the specimen were further sandwiched between iron plates (thickness, 2 mm), which were pressed with a press molding machine to adhere the adhesive thermoplastic resin to the PET film under pressure and heat.

The press molding was performed under the conditions including a preheating step at 240°C x 120 seconds, a pressing step at 240°C x 120 seconds (pressure = 50 kgf/cm$^2$) and a cooling step with a water-cooled press for 60 seconds (pressure = 10 kgf/cm$^2$).

[Method of Adhesiveness Test]

The laminated specimen obtained by press molding was sliced in the width of 15 mm and used for the adhesiveness test.

The adhesiveness test was performed by using the T-shape peeling method under the conditions including a crosshead speed of 300 mm/min and the temperatures of measurement atmosphere of 23°C and 100°C.

Table 3 clearly indicates that sufficient adhesion performance was retained even at 100°C.

[Table 3]

| Table 3 Evaluation of Adhesion (Adhesiveness at High Temperature) | | | | |
|---|---|---|---|---|
| Example | Olefin Polymer | Adherend | Measurement Atmosphere Temperature | Adhesive Strength (N/15 mm) |
| Example 25 | G-4 | PET film | 23°C | 60 |
| | | | 100°C | 56 |

[Example 26]

[1] A mixture of 10 parts by weight of the olefin polymer G-1 according to Manufacture Example 1, 40 parts by weight of linear low density polyethylene made by Prime Polymer Co., Ltd. (trade name, ULTZEX 2021L) as polyethylene and 60 parts by weight of an ethylene-propylene random copolymer made by Mitsui Chemicals Inc. (TAFMER P0680) as an elastomer was dry-blended and then fed from a hopper to a co-rotating twin-screw extruder (KZW-15G made by TECHNOVEL Corporation, L/D = 15, diameter = 15 mm) set at temperature of 200°C and revolution number of 200 rpm to melt-knead to obtain the thermoplastic resin composition (H-1) in a form of pellets.

[2] Random polypropylene made by Prime Polymer Co., Ltd. (grade F227D; MFR = 7.0 g/10 min; tensile modulus of = 950 MPa; tensile strain at break = 200% or more), the thermoplastic resin composition (H-1) obtained in [1] above and polyethylene terephthalate made by Mitsui Chemicals Inc. (grade J135) were independently fed into each of three extruders tied with one die as an extrusion molding machine such that the maximum temperature at extrusion was set at 220°C for the random polypropylene, 230°C for the polymer composition and 280°C for the polyethylene terephthalate, and co-extruded through a T die (diameter of die = 40 mm) to form a three-layered structure stacked with the random polypropylene (40 μm thick), thermoplastic resin composition (H-1) (40 μm thick) and polyethylene terephthalate (160 μm thick) in this order. In this way, a laminate structure composed of three layers of the random polypropylene layer as an (A) layer, the hybrid polymer-containing layer as a (B) layer and the polyethylene terephthalate layer as a (C) layer was manufactured.

The interfacial adhesive strength between the (B) and (C) layers in the laminate structure obtained in [2] above was measured with a T-peeling test under the conditions including the temperature of peeling atmosphere at 23°C, a peel rate at 500 mm/min and a peel width at 10 mm. The results are shown in Table 4.

[Examples 27 to 33]

The laminate structure composed of three layers of the random polypropylene layer as the (A) layer, the hybrid polymer-containing layer as the (B) layer and the polyethylene terephthalate layer as the (C) layer was manufactured similarly as the method in Example 26 except that 10 parts by weight of the olefin polymers according to Table 4 instead of the olefin polymer G-1, 40 parts by weight of random polypropylene made by Prime Polymer Co., Ltd. (F327) as polypropylene and 60 parts by weight of an ethylene-propylene random copolymer made by Mitsui Chemicals Inc. (TAFMER P-0680) as an elastomer were used. The interfacial adhesive strength between the (B) and (C) layers in the laminate structure obtained was measured with a T-peeling test under the conditions including the temperature of peeling atmosphere at 23°C, a peel rate at 500 mm/min and a peel width at 10 mm. The results are shown in Table 4.

[Comparative Examples 13 to 16]

The laminate structure composed of three layers of the random polypropylene layer as the (A) layer, the hybrid polymer-containing layer as the (B) layer and the polyethylene terephthalate layer as the (C) layer was manufactured similarly as the method in Example 27 except that maleinated PP according to Comparative Example 2, glycidyl methacrylate-copolymerized polyethylene (Bondfast E made by Sumitomo Chemical Co., Ltd.), the olefin polymer G-21 according to Manufacture Example 21 or the olefin polymer G-22 according to Manufacture Example 22 were used. The interfacial adhesive strength between the (B) and (C) layers in the laminate structure obtained was measured with a T-peeling test under the conditions including the temperature of peeling atmosphere at 23°C, a peel rate at 500 mm/min and a peel width at 10 mm. The results are shown in Table 4. As clearly found in comparison with Examples 26 to 33, the adhesive strength with PET is low.

[Table 4]

| Table 4 Evaluation of Adhesiveness of Resin Compositions | | |
|---|---|---|
| Example | Adhesive Thermoplastic Resin | Peel Strength (N) |
| Example 26 | G-1 | 21 |
| Example 27 | G-4 | 8 |
| Example 28 | G-5 | 7 |
| Example 29 | G-7 | 7 |
| Example 30 | G-14 | 10 |
| Example 31 | G-15 | 9 |
| Example 32 | G-16 | 11 |
| Example 33 | G-20 | 15 |
| Comparative Example 13 | Maleinated PP | 1 |
| Comparative Example 14 | Bondfast E | 3 |
| Comparative Example 15 | G-21 | 0.3 |

(continued)

| Table 4 Evaluation of Adhesiveness of Resin Compositions | | |
|---|---|---|
| Example | Adhesive Thermoplastic Resin | Peel Strength (N) |
| Comparative Example 16 | G-22 | 0.4 |

The Examples and Comparative Examples above indicated that the olefin polymers related to the present invention and the compositions thereof show excellent adhesiveness to various adherend materials and have a polymer structure with adhesion performance with a resin, which is difficult to adhere with the existing modified polyolefins such as PET or polyimide. They also exhibit sufficient adhesiveness at 100°C, indicating that they are adhesives having heat resistance. A transmission electron micrograph of the resin of Manufacture Example 4 after annealing at 200°C is shown in Figure 1. This picture reveals the phase of the stained P (nBA-g-GMA) segment is a phase structure present in the polypropylene matrix as a dispersed phase with an area average particle diameter of 30 nm.

Industrial Applicability

The present invention can be applied as the polyolefin adhesive resin compositions, which exhibit excellent performance in adhesion with not only polyolefins but also metal, glass, plastics, paper and wood.

**Claims**

1. An olefin polymer comprising a polyolefin segment (A) bonded with an addition polymer segment (B) of a non-olefinic vinyl monomer, the addition polymer segment (B) of a non-olefinic vinyl monomer containing a reactive group selected from a hydroxyl group, a carboxylic acid group, an acid anhydride group, an amino group, an epoxy group, an isocyanate group, an oxazoline group, a phosphoric acid group, a phosphoric acid ester group, a boric acid group, a boric acid ester group and a thiarane group.

2. The olefin polymer according to claim 1, wherein the reactive group is contained in the addition polymer segment (B) in a range of 0.5 mol% or more and 75 mol% or less as a monomer unit.

3. The olefin polymers according to claim 1, wherein the addition polymer segment (B) has a structure, in which (meth) acyclic acid ester or styrene is copolymerized with a vinyl monomer having a group selected from a hydroxyl group, a carboxyl group, an acid anhydride group, an amino group, an epoxy group, an isocyanate group, an oxazoline group, a maleimide group, a phosphoric acid group, a boric acid group and a group derived therefrom.

4. The olefin polymer according to claim 1, wherein the addition polymer segment (B) is a segment (B') grown by chain propagation of radical polymerizable monomer.

5. A resin composition comprising 1 to 100 parts by weight of the olefin polymer according to any one of claims 1 to 4.

6. A resin composition comprising 1 to 99% by weight of the olefin polymer according to any one of claims 1 to 4 and 99 to 1% by weight of a polyolefin (C), provided that a sum of both polymer is 100% by weight.

7. The resin composition according to claim 5 or 6, wherein a weight composition ratio [B"] / [B] of a polymer (B") not covalently bonded with either of the addition polymer segment (B) and the polyolefin segment (A) and similar to the polymer segment (B) versus the addition polymer segment (B), is less than 1.0.

8. The resin composition according to claim 5, wherein, in the phase structure of the resin section observed by a transmission electron microscope, a phase consisting of the addition polymer segment (B) forms a dispersed phase having an area average particle diameter of 0 to 300 nm.

9. The resin composition according to any one of claims 5 to 7, wherein an endothermic peak of the polyolefin segment (A) due to a melting point (Tm) measured by a differential scanning calorimeter (DSC) is present at 50°C or more and a glass transition temperature of the addition polymer segment (B) measured by the differential scanning calorimeter (DSC) is 50°C or less.

**10.** An adhesive comprising the resin composition according to any one of claims 5 to 9.

**11.** A sheet-like molded article comprising the resin composition according to any one of claims 5 to 9.

**12.** An adhesive dispersion comprising dispersing the resin composition according to any one of claims 5 to 9 in water or an organic solvent.

**13.** An adhesive material, comprising coating the resin composition according to any one of claims 5 to 9 on the surface of the adhesive material in a thickness of 0.01 $\mu$m to 1 mm.

FIG. 1

## INTERNATIONAL SEARCH REPORT

International application No.

PCT/JP2006/324515

A. CLASSIFICATION OF SUBJECT MATTER
*C08F291/00* (2006.01) i, *C08L23/00* (2006.01) i, *C08L51/00* (2006.01) i

According to International Patent Classification (IPC) or to both national classification and IPC

B. FIELDS SEARCHED

Minimum documentation searched (classification system followed by classification symbols)
C08F291/00, C08L23/00, C08L51/00

Documentation searched other than minimum documentation to the extent that such documents are included in the fields searched
Jitsuyo Shinan Koho          1922-1996     Jitsuyo Shinan Toroku Koho    1996-2007
Kokai Jitsuyo Shinan Koho    1971-2007     Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-48172 A (Mitsubishi Electric Corp.), 24 February, 2005 (24.02.05), Claims; Par. No. [0008] & WO 2005/005503 A1    & EP 1645576 A1 & US 2006/178486 A1 | 1-13 |
| X | JP 2004-131620 A (Mitsui Chemicals, Inc.), 30 April, 2004 (30.04.04), Claims; Par. No. [0044] & EP 1408058 A1           & US 2004/110903 A1 | 1-13 |
| X | JP 4-175307 A (Mitsui Petrochemical Industries, Ltd.), 23 June, 1992 (23.06.92), Claims; page 7, lower right column to page 8 (Family: none) | 1-13 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 February, 2007 (16.02.07) | 27 February, 2007 (27.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/324515 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2000-198825 A (Kaneka Corp.),<br>18 July, 2000 (18.07.00),<br>Claims; Par. Nos. [0185] to [0189]<br>(Family: none) | 1-13 |
| X<br>Y | JP 2001-507399 A (The Procter &<br>Gamble Co.),<br>05 June, 2001 (05.06.01),<br>Claims<br>& WO 98/51722 A1      & US 5986015 B1<br>& EP 981559 A1 | 1-9,11<br>10,12-13 |
| X<br>Y | JP 2005-194487 A (Dai Nippon Toryo Co.,<br>Ltd.),<br>21 July, 2005 (21.07.05),<br>Claims; Par. Nos. [0012] to [0013]<br>(Family: none) | 1-9,11<br>10,12-13 |
| X<br>Y | JP 2004-300412 A (Mitsui Chemicals, Inc.),<br>28 October, 2004 (28.10.04),<br>Claims; Par. No. [0004]<br>& EP 1457512 A1      & US 2004/220346 A1 | 1-9,11<br>10,12-13 |
| E,Y | WO 2007/007762 A1 (Mitsui Chemicals, Inc.),<br>18 January, 2007 (18.01.07),<br>Claims; Par. Nos. [0077], [0082]<br>(Family: none) | 1-13 |
| E,X<br>E,A | WO 2007/007675 A1 (Mitsui Chemicals, Inc.),<br>18 January, 2007 (18.01.07),<br>Claims<br>(Family: none) | 1-9,11<br>10,12-13 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002167413 A
- JP 2004131620 A
- WO 9630421 A
- WO 9718247 A
- WO 9801480 A
- WO 9840415 A
- WO 00156795 A
- JP H841117 B
- JP H9208616 B
- JP 2000264914 A
- JP 2001316410 A
- JP 2002080523 A
- JP 2004307872 A
- JP S4327421 B
- JP S4415422 B
- JP 2000159843 A
- JP 2002145944 A

**Non-patent literature cited in the description**

- *Trend Polym. Sci.,* 1996, vol. 4, 456
- *Science,* 1996, vol. 272, 866
- *Chem. Rev.,* 2001, vol. 101, 2921
- **SAWAMOTO et al.** *Chem. Rev.,* 2001, vol. 101, 3689
- **G.A. RUSSEL et al.** *J. Am. Chem. Soc.,* 1955, vol. 77, 4025
- **P.R. SCHNEINER et al.** *Angew. Chem. Int. Ed. Engl.,* 1998, vol. 37, 1895
- **M.C. FORD et al.** *J. Chem. Soc.,* 1952, 2240
- *Macromolecules,* 1999, vol. 32, 5495
- *Polymer,* 1999, vol. 40, 2441